# EUROPEAN PATENT SPECIFICATION

(11) **EP 2 461 623 B1**
(45) Date of publication and mention of the grant of the patent: **26.02.2020**
(21) Application number: 09848618.6
(22) Date of filing: 27.08.2009
(51) Int. Cl.: H04W 28/04, H04L 27/38, H04L 1/00, H04J 3/16, H04L 1/20

(54) **METHOD AND SYSTEM FOR IMPROVING SIGNAL QUALITY**
VERFAHREN UND SYSTEM ZUR VERBESSERUNG DER SIGNALQUALITÄT
PROCÉDÉ ET SYSTÈME POUR AMÉLIORER LA QUALITÉ DES SIGNAUX

(43) Date of publication of application: 06.06.2012
(73) Proprietor: Huawei Technologies Co., Ltd., Longgang District Shenzhen, Guangdong 518129 (CN)
(72) Inventor: QING, Huaping, Shenzhen Guangdong 518129 (CN); YU, Fan, Shenzhen Guangdong 518129 (CN); CHANG, Deyuan, Shenzhen Guangdong 518129 (CN); DING, Chiwu, Shenzhen Guangdong 518129 (CN); HUANG, Yuanda, Shenzhen Guangdong 518129 (CN); SU, Wei, Shenzhen Guangdong 518129 (CN); LI, Yang, Shenzhen Guangdong 518129 (CN); SHEN, Yao, Shenzhen Guangdong 518129 (CN)
(74) Representative: Thun, Clemens
(86) International application number: PCT/CN2009/073560
(87) International publication number: WO 2011/022886

(56) References cited:
- WO-A1-02/096003
- WO-A1-2009/029948
- CN-A- 1 269 107
- CN-A- 101 369 853
- US-A1- 2008 031 633
- US-B1- 6 742 154
- US-B1- 6 829 741

## Description

### FIELD OF THE INVENTION

The present invention relates to the field of communications technologies, and in particular, to a method, a device, and an apparatus for improving signal quality.

### BACKGROUND OF THE INVENTION

With the rapid development of the Internet service, IP traffic increases explosively. The optical transport network is becoming IP Internet-oriented, more service-integrated, flexible in resource configuration, and strong in survivability. An optical transport system with a high-rate and great capacity will be widely used in the future and the optical transport system with a rate level of 40 G or even 100 G will become the core of the optical transport network in the future.

Based on the wavelength division multiplexing technology, the OTN (Optical Transport Network, optical transport network) organized at the optical layer is the next generation backbone transport network. The procedure of signal processing on the OTN is as follows: The optical channel transport unit processing module at a sending end processes a customer signal to obtain an optical channel transport unit frame signal of, and then a physical layer at the sending end modulates data obtained by the optical channel transport unit processing module at the sending end and then transmits the data; a physical layer at a receiving end receives and demodulates the transmitted signal, and an optical channel transport unit processing module at the receiving end processes data obtained by the physical layer at the receiving end to restore the optical channel transport unit frame signal, and then processes the optical channel transport unit frame signal to obtain the customer signal transmitted from the sending end on the OTN.

As regards the DWDM (dense wavelength division multiplexing) technology at the physical layer of the OTN, a new modulation technology is used to compress a transmission frequency band to improve the utilization of the frequency band and to achieve a high performance for the system, which better prevents the impacts from group velocity dispersion and polarization mode dispersion. For example, in an optical transport system with a rate of 112 Gbps, the DP-QOSK (dual polarization-quadrature phase shift keying, dual polarization-quadrature phase shift keying) modulation technology is used to distribute the data obtained by the optical transport unit processing module onto four 28 Gbps-channels for transmission. The four channels are channel I in an X polarization state, channel Q in the X polarization state, channel I a Y polarization, and channel Q in the Y polarization state. Upon receiving optical signals, by polarization demultiplexing, an optical module at the receiving end converts the 112 Gbps-signals into two mutually orthogonal polarizations QPSK phase modulated optical signals (that is, a signal in the X polarization state and a signal in the Y polarization state), each signal with a transmission rate of 56 Gbps. A QPSK demodulator converts each one of QPSK modulated optical signals into signals on channel I and channel Q, namely, channel I in the X polarization state, channel Q in the X polarization state, channel I in the Y polarization state, and channel Q in the Y polarization state. In this case, four 28 Gbps-signals are obtained. The channels on which the 4 signals are transmitted are called physical lanes. The signals transmitted on the four physical lanes are de-multiplexed by a 4:10 SerDes (SERializer/DESerializer), and a 10:20 Demux (Demultiplexer) and then aligned and rearranged in a multi lane distribution unit of the optical channel transport unit processing module at the receiving end to restore the optical channel transport unit frame signal. Then, the optical channel transport unit frame signal is processed to restore the customer signal.

The prior art has the following disadvantages:
When the optical module receives and demodulates the optical signals, the demodulated signals are poor in quality because the phases of the signals on channels I and Q in each QPSK demodulation are not completely orthogonal. The poor signal quality affects the subsequent processing. In the prior art, no improvement on the poor signal quality exists, and as a result, a high signal quality may not be obtained.

WO 02/096003 A1 at best disclose as follows. An apparatus and method for dynamically optimizing performance in a communication channel are described. The communication channel can be part of a high-speed digital network such as the Internet and can be a dense wavelength-division multiplexed (DWDM) optical communication channel. The DWDM signal includes forward error correction (FEC) information which is added to the DWDM signal and is used within the DWDM optical layer to monitor transfer errors in the data. Error correction statistics generated as a result of analysis of the FEC information in the data in accordance with the invention are used in generating an adjustment to and/or optimizing performance of the system. The adjustment made can include adjusting power level in one or more of the subsignal transmitters.

### SUMMARY OF THE INVENTION

Embodiments of the present invention provide a method, and a system for improving signal quality, which are capable of improving quality of each channel of signals demodulated by an optical module.

To achieve the objectives, the embodiments of the present invention adopt the following technical solutions.

A method for improving signal quality includes:
at a sending end, distributing a scrambled optical transport unit frame signal onto the virtual lanes in unit of frame, and multiplexing signals transmitted on the virtual lanes onto corresponding physical lanes;
at a receiving end, demultiplexing the signal transmitted on each physical lane to obtain the signal transmitted on each virtual lane, and rearranging the signal transmitted on each virtual lane to restore the optical transport unit frame signal;
collecting a statistic of an error correction bit rate of data bits of a signal corresponding to each virtual lane during forward error correction FEC decoding;
calculating a pre-correction bit error rate of a physical lane corresponding to each virtual lane according to the error correction bit rate of the data bits of the signal corresponding to each virtual lane;
feeding back the pre-correction bit error rate of each physical lane to an optical module, wherein the optical module is at the receiving end; and
adjusting, by the optical module, a receiving parameter of each physical lane to reduce the pre-correction bit error rate of each physical lane.

An optical transport network apparatus includes:
a frame distribution unit, configured to distribute a scrambled optical transport unit frame signal onto the virtual lanes in unit of frame;
a multiplexing module, configured to multiplex the signals transmitted on the virtual lanes to corresponding physical lanes;
a demultiplexing module, configured to demultiplex the signal transmitted on each physical lane to obtain the signal transmitted on each virtual lane;
a frame rearrangement unit, configured to perform frame rearrangement on the signal transmitted on each virtual lane and obtained by the demultiplexing module to restore the optical transport unit frame signal; and
a pre-correction bit error rate feedback device, configured to collect a statistic of an error correction bit rates of data bits of a signal corresponding to each virtual lane during FEC decoding, calculate a pre-correction bit error rate of a physical lane corresponding to each virtual lane according to the error correction bit rate of the data bits of the signal corresponding to each virtual lane, and feeds back the pre-correction bit error rate of each physical lane to an optical module at a receiving end,
the optical module at the receiving end, configured to receive a pre-correction bit error rate of each physical lane fed back by the pre-correction bit error rate feedback device and to adjust a receiving parameter of each physical lane according to the pre-correction bit error rate of each physical lane to reduce the pre-correction bit error rate of each physical lane.

With the method, device, and apparatus for improving the signal quality according to embodiments of the present invention, the statistic of the error correction bit rate of the data bits of each virtual lane is collected, the pre-correction bit error rate of the physical lane corresponding to each virtual lane is calculated according to the error correction bit rate and then is fed back to the optical module. Then, the optical module can adjust the receiving parameter of each physical lane accordingly to reduce the pre-correction bit error rate of each physical lane, which improves the quality of each channel of signals demodulated by the optical module.

### BRIEF DESCRIPTION OF THE DRAWINGS

In order to clearly describe the technical solutions of the present invention or the prior art, the accompanying drawings used in the description of the embodiment or the prior art are briefly introduced. It is obvious that the accompanying drawings to be described are only a part rather than all of the embodiments of the present invention. Other accompanying drawings may be obtained by persons skilled in the art based on the accompanying drawings without carrying out creative activities.
FIG. 1 is a schematic flowchart of a method for improving signal quality according to an embodiment of the present invention;
FIG. 2 is a schematic structural diagram of a pre-correction bit error rate feedback device according to an embodiment of the present invention;
FIG. 3 is a schematic structural diagram of an optical transport network apparatus according to an embodiment of the present invention;
FIG. 4 is a schematic structural diagram of an optical transport network apparatus in the prior art;
FIG. 5 is a schematic structural diagram of a pre-correction bit error rate feedback device according to Embodiment 5 of the present invention;
FIG. 6 is a schematic structural diagram of an optical transport network apparatus according to Embodiment 6 of the present invention;
FIG. 7 is a schematic structural diagram of an optical transport network apparatus according to Embodiment 7 of the present invention;
FIG. 8 is a schematic diagram of a process of multiplexing signals transmitted on 20 virtual lanes onto four physical lanes according to Embodiment 7 of the present invention;
FIG. 9 is a schematic structural diagram of an optical transport network apparatus according to Embodiment 8 of the present invention;
FIG. 10 is a schematic diagram of a process of multiplexing signals transmitted on 20 virtual lanes onto four physical lanes according to Embodiment 8 of the present invention;
FIG. 11 is a schematic structural diagram of an optical transport network apparatus according to Embodiment 9 of the present invention;
FIG. 12A is a schematic diagram of a process of frame distribution according to Embodiment 9 of the present invention;
FIG. 12B is a schematic diagram of a process of frame rearrangement according to Embodiment 9 of the present invention;
FIG. 13 is a schematic structural diagram of another optical transport network apparatus according to Embodiment 9 of the present invention; and
FIG. 14 is a schematic structural diagram of an optical transport network apparatus according to Embodiment 10 of the present invention.

### DETAILED EMBODIMENTS

The technical solutions according to the embodiments of the present invention will be clearly and fully described in the following with reference to the accompanying drawings. It is obvious that the embodiments to be described are only a part rather than all of the embodiments of the present invention. Persons of ordinary skill in the art can derive other embodiments based on the embodiments of the present invention without creative efforts, which all fall within the scope of the present invention. The scope of the invention is defined in the appended claims. Any reference to "embodiment(s)" or "aspect(s) of the invention" in this description not falling under the scope of the claims should be interpreted as illustrative example(s) for understanding the invention.

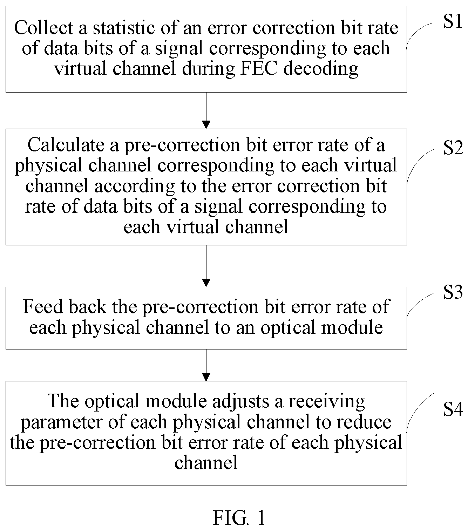

A method for improving signal quality is provided in an embodiment of the present invention. FIG. 1 shows a flowchart of the method, including the following steps.

Step S1: Collect a statistic of an error correction bit rate of data bits of a signal corresponding to each virtual lane during FEC (Forward Error Correction) decoding.

Step S2: Calculate a pre-correction bit error rate of a physical lane corresponding to each virtue channel according to the error correction bit rate of data bits of a signal corresponding to each virtual lane.

Step S3: Feed back the pre-correction bit error rate of each physical lane to an optical module.

Step S4: The optical module adjusts a receiving parameter of each physical lane to reduce the pre-correction bit error rate of each physical lane.

Through the method for improving the signal quality according to the embodiment of the present invention, the pre-correction bit error rate of each physical lane may be obtained and fed back to the optical module. The optical module adjusts the receiving parameter of each physical lane accordingly to reduce the pre-correction bit error rate of each physical lane, thereby improving the quality of each channel of signals demodulated by the optical module.

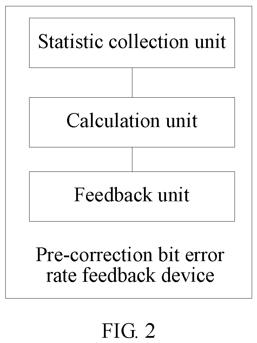

A pre-correction bit error rate feedback device is provided in an embodiment of the present invention. FIG. 2 shows a structure of the device, including:
a statistic collection unit, configured to collect a statistic for an error correction bit rate of data bits of a signal corresponding to each virtual lane during FEC decoding;
a calculation unit, configured to calculate a pre-correction bit error rate of a physical lane corresponding to each virtual lane according to the error correction bit rate of data bits of the signal corresponding to each virtual lane; and
a feedback unit, configured to feed back the pre-correction bit error rate to an optical module so that the optical module adjusts a receiving parameter of each physical lane to reduce the pre-correction bit error rate of each physical lane.

Through the pre-correction bit error rate feedback device according to the embodiment of the present invention, the pre-correction bit error rate of each physical lane may be obtained during FEC decoding and fed back to the optical module. The optical module can adjust the receiving parameter of the optical module to reduce the pre-correction bit error rate of each physical lane, thereby improving the quality of each channel of signals demodulated by the optical module.

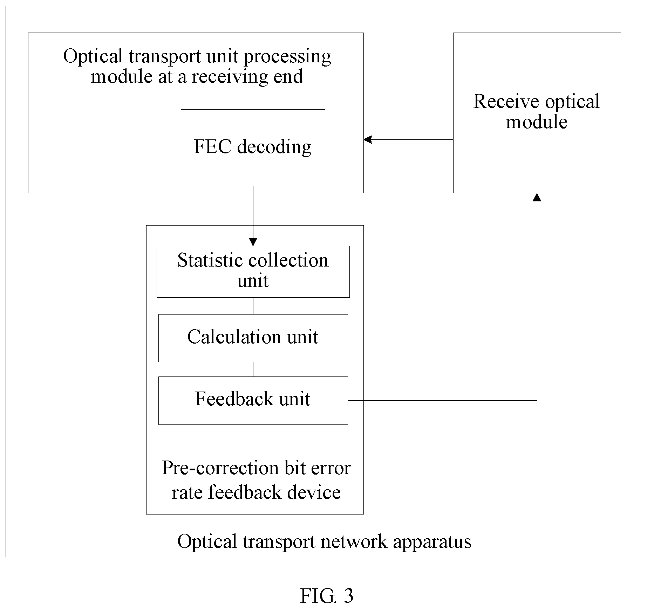

An OTN apparatus is provided in an embodiment of the present invention. FIG. 3 shows a structure of the OTN apparatus, including an optical module at a receiving end and a pre-correction bit error rate feedback device shown in FIG. 2.

The optical module at the receiving end is configured to demodulate a signal to obtain a signal transmitted on each physical lane, receive a pre-correction bit error rate of each physical lane fed back by the pre-correction bit error rate feedback device, and adjust a receiving parameter of each physical lane according to the pre-correction bit error rate of each physical lane to reduce the pre-correction bit error rate of each physical lane.

The pre-correction bit error rate feedback device is configured to collect a statistic for an error correction bit rate of data bits of a signal corresponding to each virtual lane during FEC decoding, calculate a pre-correction bit error rate of a physical lane corresponding to each virtual lane according to the error correction bit rate of the data bits of the signal corresponding to each virtual lane, and feed back the pre-correction bit error rate to the optical module at the receiving end.

The OTN apparatus provided in an embodiment of the present invention is equipped with a pre-correction bit error rate feedback device, so the OTN apparatus can adjust the receiving parameter of the receiving optical module therein according to the pre-correction bit error rate of each physical lane that is fed back by the pre-correction bit error rate feedback device, thereby improving the quality of each channel of signals demodulated by the optical module.

For better understanding of the embodiment of the present invention, the method for improving the signal quality, the pre-correction bit error rate feedback device, and the OTN apparatus are described in detail in the following specific application scenarios. Implementation of the present invention is, however, not limited to the following embodiments.

### Embodiment 1

This embodiment provides a method for improving signal quality. The following takes the 100G OTN transmission apparatus and a DP-QPSK demodulation mode as examples for illustration.

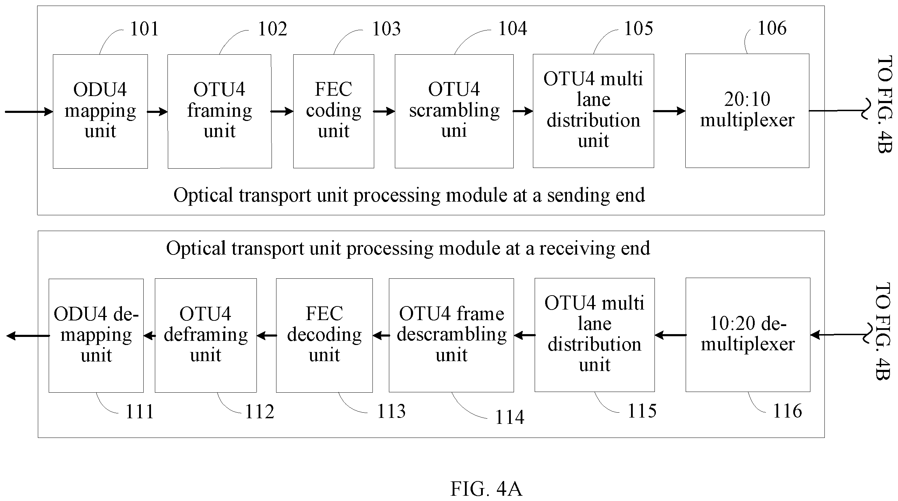

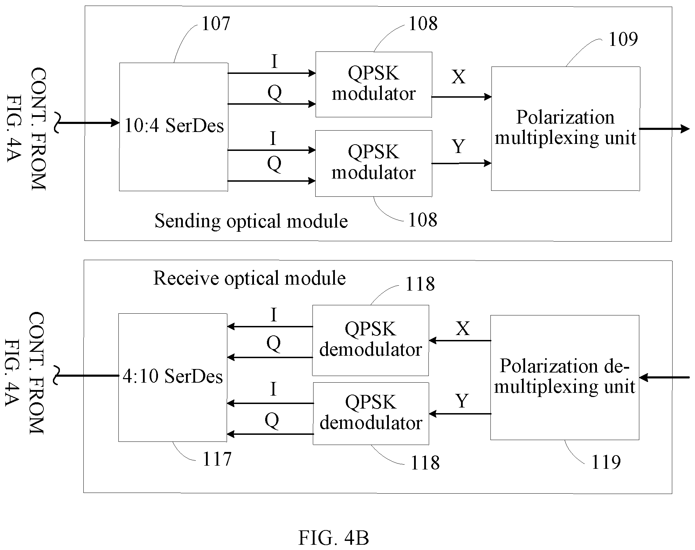

As shown in FIG. 4, the 100G OTN transmission apparatus includes an OTU (Optical Transport Unit , optical transport unit) processing module and an optical module. The OTU processing module includes an OTU processing module at a sending end and an OTU processing module at a receiving end. The optical module includes a sending optical module and a receiving optical module.

Specifically, the OTU processing module at the sending end may specifically include:
an ODU4 mapping unit 101, configured to map a customer signal to an ODU4 (Optical Data Unit4) signal, and send the mapped signal to an OTU4 framing unit 102, where the customer signal may be an SDH (synchronous digital hierarchy, synchronous digital hierarchy) signal, or an ATM (Asynchronous Transfer Mode, asynchronous transfer mode) signal;
the OTU4 framing unit 102, configured to encapsulate the ODU4 signal and add OTU4 frame overhead to generate an OTU4 frame signal and send the OTU4 frame signal to an FEC coding unit 103;
the FEC coding unit 103, configured to perform FEC coding on the OTU4 frame signal, fill check bits of the OTU4 frame signal with generated FEC check bits, and send the FEC-coded OTU4 frame signal to an OTU scrambling unit 104;
the OTU4 scrambling unit 104, configured to scramble the FEC-coded OTU4 frame signal, and send the scrambled OTU4 frame signal to an OTU4 MLD (Multi Lane Distribution) unit 105;
the OTU4 MLD unit 105, configured to distribute the scrambled OTU4 frame signal onto 20 virtual lanes; and
a 20:10 MUX (Multiplexer) 106, configured to multiplex the signals transmitted on the 20 virtual lanes distributed by the OTU4 MLD into 10 channels of signals according to a rule of multiplexing signals transmitted on each two virtual lanes into one channel. The 20:10 MUX 106 may be formed by ten 2:1 MUXs.

Further, the sending optical module may specifically include:
a 10:4 SerDes (SERializer/DESerializer) 107, configured to multiplex the 10 channels of signals obtained by the 20:10 MUX 106 onto 4 physical lanes, where the 4 physical lanes are: channel I in an X polarization state, channel Q in the X polarization state, channel I in a Y polarization state, and channel Q in the Y polarization state;
two QPSK modulators 108, configured to perform QPSK modulation respectively on an optical carrier in the X polarization state and an optical carrier in Y polarization according to data transmitted on the four physical lanes to obtain two channels of QPSK modulated signals; and
a polarization multiplexing unit 109, configured to perform polarization multiplexing on the two channels of modulated signals to form a DP-QPSK signal with a rate level of 100 Gbit/s.

Accordingly, the receiving optical module may specifically include:
a polarization demultiplexing module 119, configured to receive the DP-QPSK signal with the rate level of 100 Gbit/s sent by a peer OTN apparatus, and perform polarization demultiplexing on the DP-QPSK signal, namely, to convert the DP-QSPK signal into two channels of signals with polarization states orthogonal to each other, where a signal on one channel is a QPSK modulated signal in the X polarization state, and a signal on the other channel is a QPSK modulated signal in the Y polarization state;
two QPSK demodulators 118, configured to perform QPSK demodulation respectively on the QPSK modulated signal in the X polarization state and the QPSK modulated signal in the Y polarization state to obtain a signal transmitted on channel I in the X polarization state, a signal transmitted on channel Q in the X polarization state, a signal transmitted on channel I in the Y polarization state, and a signal transmitted on channel Q in the Y polarization state, the channels on which the four channels of signals are transmitted are called physical lanes; and
a 4:10 SerDes 117, configured to perform 4:10 demultiplexing on the signals transmitted on the four physical lanes to obtain 10 channels of signals.

The OTU processing module at the receiving end may specifically include:
a 10:20 DEMUX (Demultiplexer) 116, configured to perform 1:2 demultiplexing on each channelof the 10 channels of signals obtained by the 4:10 SerDes 117 to restore the signals transmitted on 20 virtual lanes;
an OTU4 MLD unit 115, configured to align and rearrange the signals transmitted on the 20 virtual lanes obtained by the 10:20 DEMUX 116 to restore the OTU4 frame signal;
an OTU4 descrambling unit 114, configured to descramble the restored OTU4 frame signal, and send the descrambled OTU4 frame signal to an FEC decoding unit 113;
the FEC decoding unit 113, configured to perform forward error correction decoding on the descrambled OTU4 frame signal, and send the decoded data to an OTU4 deframing unit 112;
the OTU4 deframing unit 112, configured to parse the FEC-decoded OTU4 frame signal and perform overhead extraction and check to obtain an ODU4 signal, and then send the ODU4 signal to an ODU4 de-mapping unit 111; and
the ODU4 de-mapping unit 111, configured to de-map the ODU4 signal into a customer signal.

Further, the OTU4 MLD unit 115 at the sending end may specifically distribute a complete OTU4 frame signal onto the 20 virtual lanes according to the following rule: The OTU4 frame signal is divided into 16-byte blocks, and the blocks are circularly distributed onto the 20 virtual lanes in a left-to-right and up-to-bottom sequence. On each frame border, a start channel for the circular distribution moves down by one channel. An FAS (Frame alignment signal) distributed onto each virtual lane carries a number of the virtual lane.

With a channel rotation mechanism of the MLD, the first 16 bytes of the OTU4 frame are rotated to a next virtual lane with a interval of 4080 × 4 bytes (the length of an OTU4 frame), and then the remaining bytes of the frame are distributed in sequence. Therefore, data on each virtual lane corresponds to fixed data in the OTU4 frame. For example, bytes 1-16, bytes 321-336, bytes 641-656, ..., and bytes 16001-16016 correspond to virtual lane 1; and bytes 17-32, bytes 337-352, ..., and bytes 16016-16032 correspond to channel 2.

The OTU4 MLD unit 115 at the receiving end aligns and rearranges the received signals transmitted on the 20 virtual lanes according to the FAS (Frame Alignment Signal) of a frame header to restore a data format of the original OTU4 frame signal in a rotation manner.

Accordingly, the method for improving the signal quality provided in this embodiment is as follows:
In the application of FEC in an optical system, the FEC requires a low output bit error ratio, generally at a level of le-12/1e-15. Therefore, within the error correction capability of the FEC, it can be considered that the number of bits that are corrected per second during the FEC decoding is an error correction bit rate of a signal output by the optical module.

The FEC decoding unit 113 may obtain a corrected bit location during the FEC decoding, for example, by solving an error location polynomial. By collecting a statistic of the number of the corrected bit locations within the unit time period, the FEC decoding unit may obtain the error correction bit rate of the signal output by the receiving optical module.

In actual practice such as concurrent 8-bit processing in the FEC decoding, within the first clock period of a current frame, the FEC decoding unit 113 indicates the error correction of the third bit, and therefore the statistic shows that an error occurs in the third bit. When the cascaded FEC iterative decoding is used, the error correction bit rate obtained by the decoding unit in each stage during the iterative decoding is obtained. For example, if an outer code and inner code solution are used during the FEC coding, in the FEC decoding, the error correction bit rate of the outer code decoding during the first stage iterative decoding, the error correction bite rate of the inner code decoding during the first stage iterative decoding, the error correction bit rate of the outer code decoding during the second stage iterative decoding, and the error correction bit rate of the inner code decoding during the second stage iterative decoding are obtained. The process continues until the error correction bit rates of all the decoding units are obtained.

In addition, the FEC decoding unit 113 may also obtain identification information of the virtual lanes corresponding to the physical lanes restored by the 10:20 DEMUX 116, for example, identifiers of virtual lanes 2, 6, 10, 14, and 18 corresponding to channel I in the X polarization state, and identifiers of virtual lanes 1, 5, 9, 13, and 17 corresponding to channel Q in the X polarization state. Due to data distribution property of multi lane distribution, in each data transmission, data on fixed five virtual lanes is transmitted on the same physical lane.

Due to corresponding between the virtual lane and the physical lane, the pre-correction bit error rate of the physical lane corresponding to each virtual lane can be determined by determining the error correction bit rate of the virtual lane. Therefore, during the FEC decoding, the error correction bit rates of data bits of a signal corresponding to each of the 20 virtual lanes are calculated respectively, and then according to the error correction bit rates of data bits of the signal corresponding to each virtual lane, the pre-correction bit error rate of the physical lane corresponding to each virtual lane is calculated. To be specific, according to identification information of the virtual lane corresponding to each physical lane, the error correction bit rates of the data bits of the signals on the virtual lanes identified by the identification information are accumulated to obtain the pre-correction bit error rate of the physical lane corresponding to each virtual lane.

Then, the collected pre-correction bit error rate of each physical lane is fed back to the receiving optical module. The receiving optical module adjusts a receiving parameter of each physical lane according to the feedback, and in particular, adjusts a pre-emphasis parameter of each phase (channel I and channel Q) of the QPSK demodulator, a equalizer coefficient, and a threshold value of a decision circuit until the pre-correction bit error rate of each physical lane is minimized and the performance of the receiving optical module is optimal.

With the method for improving the signal quality provided in the embodiment of the present invention, the statistic of the error correction bit rate of the data bits corresponding to each virtual lane may be collected, the pre-correction bit error rate of the physical lanes corresponding to the virtual lanes is calculated through the error correction bit rate and then is fed back to the receiving optical module. Then, the receiving optical module adjusts the receiving parameter accordingly to reduce the pre-correction bit error rate of each physical lane and improve the quality of each channel of signals on each channel demodulated by the optical module. Moveover, the method can be applicable to various FEC solutions.

Moreover, the method provided in this embodiment reserves the property of distributing one frame onto multiple optical channels, which facilitates proofing of burst noise on the channel.

It should be noted that the OTU4 used in this embodiment is only an example. The present invention is not limited to this, and OTUs of other orders may also be used.

### Embodiment 2

This embodiment provides another method for improving signal quality, which includes the method, described in Embodiment 1, of calculating a pre-correction bit error rate of each physical lane during FEC decoding.

In certain scenarios, for example, when the system just powers on and starts, a phase difference between channel I and channel of the QPSK demodulator is great, so a bit error of a signal may be great and a bit error rate of the signal may exceed an FEC error correction range.

In this case, the method provided in this embodiment further includes: obtaining BIP-8 (Bit Interleaved Parity 8) information from an OTU4 deframing unit 112 at a receiving end, judging whether the BIP-8 information is correct; if the BIP-8 information is incorrect, feeding back a maximum bit error rate signal to a receiving optical module, where the maximum bit error rate signal indicates that the bit error rate is great and exceeds the FEC error correction range. The receiving optical module performs coarse adjustment. For example, the receiving optical module adjusts a pre-emphasis parameter of each phase of the QPSK demodulator, a equalizer coefficient, and a threshold value of a decision circuit until the BIP-8 is correct.

Similar to Embodiment 1, during the FEC decoding, a statistic of the pre-correction bit error rate of each physical lane is collected and then fed back to the receiving optical module; the receiving optical module adjusts a receiving parameter of each physical lane accordingly until the bit error rate of each physical lane is minimized and the performance of the receiving optical module is optimal.

As such, in certain special scenarios, even though the bit error rate of the data exceeds the FEC error correction range, the receiving optical module may be instructed by the BIP information to perform coarse adjustment to preliminarily improve the quality of each channel of demodulated signals on each channel, so that the bit error rate of a signal on each channel falls into the FEC error correction range. Then, when the FEC error correction is normally performed, the pre-correction bit error rate of each physical lane in the receiving optical module is obtained. Then, the receiving parameter of each physical lane in the receiving optical module is adjusted accordingly, which further improves the quality of each channel of demodulated signals.

It should be noted that the OTU4 and BIP-8 used in this embodiment are only examples. The present invention is not limited thereto, and other OTUs or BIP may also be used.

### Embodiment 3

This embodiment provides another method for improving signal quality, which includes the method, described in Embodiment 1, of calculating a pre-correction bit error rate of each physical lane during the FEC decoding.

In certain scenarios, for example, when the system just powers on and starts, a phase difference between channel I and channel of a QPSK demodulator is great, so a bit error rate of a signal ma be great and the bit error rate of the signal may exceed an FEC error correction range.

When a code word with a CRC (Cyclic Redundancy Check) check function are used in the FEC solution, CRC information is calculated during the FEC decoding, and whether the CRC information is correct is judged. If the cyclic redundancy check information is incorrect, a maximum bit error rate signal is fed back to the receiving optical module, where the maximum bit error rate signal indicates that the bit error rate is great and exceeds the FEC error correction range. The receiving optical module performs coarse adjustment. For example, the receiving optical module adjusts a pre-emphasis parameter of each phase of the QPSK demodulator, a equalizer coefficient, and a threshold value of a decision circuit until the CRC is correct.

Similar to Embodiment 1, during the FEC decoding, a statistic of the pre-correction bit error rate of each physical lane is collected and then fed back to the receiving optical module; the receiving optical module adjusts a receiving parameter of each physical lane accordingly until the bit error rate of each physical lane is minimized so that the performance of the receiving optical module is optimal.

As such, in certain special scenarios, even though the bit error rate of the data exceeds the FEC error correction range, the receiving optical module may be instructed by the CRC information to perform coarse adjustment to preliminarily improve the quality of each channel of demodulated signals on each channel, so that the bit error rate of a signal on each channel falls into the FEC error correction range. Then, when the FEC error correction is normally performed, the pre-correction bit error rate of each physical lane in the receiving optical module is obtained. Accordingly, the parameter of each physical lane in the receiving optical module is adjusted, which further improves the quality of each channel of demodulated signals.

### Embodiment 4

This embodiment provides another method for improving signal quality, which includes the method, described in Embodiment 1, of calculating a pre-correction bit error rate of each physical lane during the FEC decoding.

In certain scenarios, when the system just powers on and starts, a phase difference between channel I and channel Q of a QPSK demodulator is great, which causes a great bit error rate, so that framing may not be implemented by an OTU4 MLD unit 115 in an OTU processing module at a receiving end. That is, the OTU4 MLD unit 115 may not restore the OTU4 frame signal according to the signal transmitted on the virtual lanes.

In this case, the method provided in this embodiment further includes: obtaining a framing failure signal from the OTU4 MLD unit 115 at the receiving end, feeding back the framing failure signal as the maximum bit error rate signal to a receiving optical module. The receiving optical module performs coarse adjustment. For example, the receiving optical module adjusts a pre-emphasis parameter of each phase of the QPSK demodulator, a equalizer coefficient, and a threshold value of a decision circuit until the framing failure signal disappears.

Similar to Embodiment 1, during the FEC decoding, a statistic of the pre-correction bit error rate of each physical lane is collected and then is fed back to the receiving optical module; the receiving optical module adjusts the receiving parameter of each physical lane accordingly until the bit error rate of each physical lane is minimized and the performance of the receiving optical module is optimal.

Accordingly, in certain special scenarios such as framing failure at the receiving end, the receiving optical module may still be instructed by the obtained framing failure signal to perform coarse adjustment to preliminarily improve the quality of each channel of demodulated signals, so that the OTU4 MLD unit 115 may perform normal framing according to the demodulated signal on the channel. Then, when the FEC error correction is normally performed, the pre-correction bit error rate of each physical lane in the receiving optical module is obtained. Accordingly, the receiving parameter of each physical lane in the receiving optical module is adjusted, which further improves the quality of each channel of demodulated signals.

### Embodiment 5

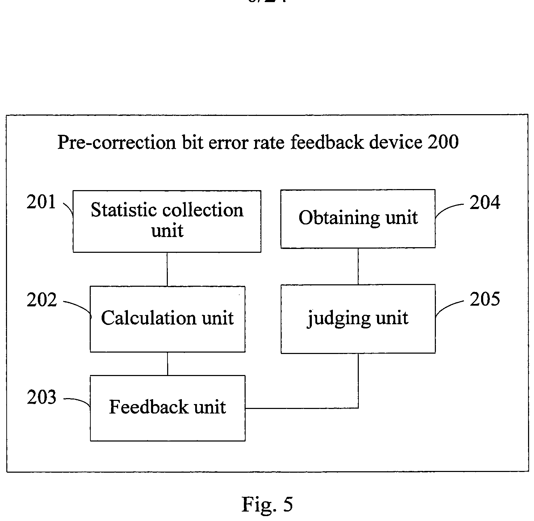

This embodiment provides a pre-correction bit error rate feedback device 200, which is applied in an OTN apparatus to obtain a pre-correction bit error rate of each physical lane, and feeds back the obtained pre-correction bit error rate to an optical module in the OTN apparatus so that the optical module can adjust a receiving parameter according to the fed-back pre-correction bit error rate of each physical lane. FIG. 5 shows a structure of the pre-correction bit error rate feedback device 200, including a statistic collection unit 201, a calculation unit 202, and a feedback unit 203.

The statistic collection unit 201 is configured to collect a statistic of an error correction bit rate of data bits of a signal corresponding to each virtual lane when a FEC decoding unit performs FEC decoding.

When the FEC decoding unit uses cascaded FEC iterative decoding, the statistic collection unit 201 obtains a statistic of an error correction bit rate output by a decoding subunit in each stage during the iterative decoding of each stage. For example, error correction bit rates of outer code decoding and inner code decoding during first stage FEC iterative decoding, and error correction bit rates of outer code decoding and inner code decoding during second stage FEC iterative decoding are obtained until the statistic collection unit 201 obtains the error correction bit rates of all the decoding subunits.

The calculation unit 202 is configured to calculate a pre-correction bit error rate of a physical lane corresponding to each virtual lane according to the error correction bit rate of the data bits of the signal corresponding to each virtual lane. For the detailed calculation process, reference may be made to a relevant section in Embodiment 1.

The feedback unit 203 is configured to feed back the pre-correction bit error rate of each physical lane to an optical module so that the optical module adjusts a receiving parameter of each physical lane to reduce the pre-correction bit error rate of each physical lane.

Further, in the scenario described in Embodiment 2, the pre-correction bit error rate feedback device further includes:
an obtaining unit 204, configured to obtain bit interleaved parity check information during deframing performed by the OTU4 deframing unit; and
a judging unit 205, configured to judge whether the bit interleaved parity check information is correct.

The feedback unit 203 is further configured to feed back a maximum bit error rate signal to the optical module when the bit interleaved parity check information is incorrect. The optical module adjusts the receiving parameter of each physical lane according to the maximum bit error rate signal until the bit interleaved parity check information is correct.

As such, in certain special scenarios, even though the bit error rate of data exceeds an FEC error correction range, the optical module may be instructed by the BIP information to perform coarse adjustment to preliminarily improve the quality of each channel of demodulated signals, so that the bit error rate of the signal on each channel falls into the FEC error correction range. Then, when the FEC error correction is normally performed, the pre-correction bit error rate of each physical lane in the optical module is obtained. Thus, the parameter of each physical lane in the optical module is adjusted accordingly, which further improves the quality of each channel of demodulated signals.

In addition, in the scenario described in Embodiment 3:
the obtaining unit 204 is configured to calculate cyclic redundancy check information in FEC decoding;
the judging unit 205 is configured to judge whether the cyclic redundancy check information is correct; and
the feedback unit 203 is further configured to feed back the maximum bit error rate signal to the optical module when the CRC information is incorrect. The optical module adjusts the receiving parameter of each physical lane according to the maximum bit error rate signal until the CRC information is correct.

As such, in certain special scenarios, even though the bit error rate of the data exceeds the FEC error correction range, the optical module may be instructed by the CRC information to perform coarse adjustment to preliminarily improve the quality of each channel of demodulated signals, so that the bit error rate of a signal on each channel falls into the FEC error correction range. Then, when the FEC error correction is normally performed, the pre-correction bit error rate of each physical lane in the optical module is obtained. Accordingly, the parameters of each physical lane in the receiving optical module are adjusted, which further improves the quality of each channel of demodulated signals.

In addition, in the scenario described in Embodiment 4:
the obtaining unit 204 is configured to obtain a framing failure signal when the OTU4 MLD unit at the receiving end fails in framing; and
the feedback unit 203 is further configured to feed back the framing failure signal to the optical module as a maximum bit error rate signal so that the optical module adjusts the receiving parameter accordingly until the framing failure signal disappears, indicating that the OTU4 MLD unit at the receiving end can perform normal framing.

As such, in certain special scenarios such as framing failure, the optical module may still be instructed by obtaining the framing failure signal to perform coarse adjustment to preliminarily improve the quality of each channel of demodulated signals, so that normal framing can be performed according to the demodulated signal on the channel. Then, when the FEC error correction is normally performed, the pre-correction bit error rate of each physical lane in the receiving optical module is obtained. Accordingly, the receiving parameter of each physical lane in the optical module is adjusted, which further improves the quality of each channel of demodulated signals.

In this embodiment, the feedback unit feeds back the pre-correction bit error rate of each physical lane to the optical module. The optical module adjusts the receiving parameter of each physical lane. To be specific, the receiving optical module in the optical module adjusts the receiving parameter of each physical lane.

With the pre-correction bit error rate feedback device provided in this embodiment, the statistic of the error correction bit rate of the data bits corresponding to each virtual lane can be collected, and the pre-correction bit error rate of the physical lanes corresponding to the virtual lanes is calculated through the error correction bit rate and fed back to the optical module. Then, the optical module can adjust the receiving parameter of each physical lane accordingly to reduce the pre-correction bit error rate of each physical lane, which improves the quality of the signal corresponding to each physical lane in the optical module.

### Embodiment 6

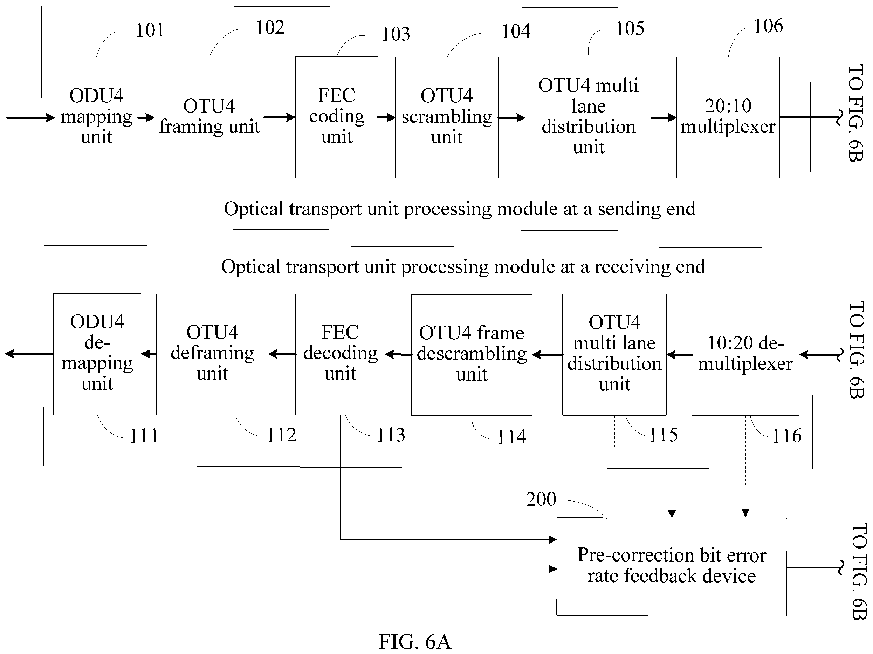

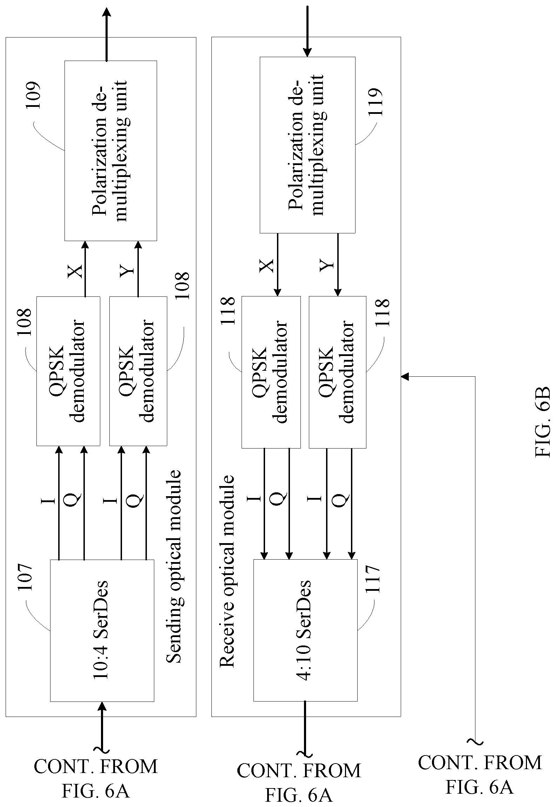

This embodiment provides an OTN apparatus, as shown in FIG. 6. Compared with the OTN apparatus described in Embodiment 1 and FIG. 4, the OTN apparatus provided in this embodiment is additionally installed with a pre-correction bit error rate feedback device 200 as described in Embodiment 5. The OTN apparatus provided in this embodiment may improve signal quality.

The OTN apparatus provided in this embodiment includes: an OTU processing module, an optical module, and a pre-correction bit error rate feedback device 200. The OTU processing module includes an OTU processing module at a sending end and an OTU processing module at a receiving end. The optical module includes a sending optical module and a receiving optical module.

The OTU processing module at the sending end may specifically include an ODU4 mapping unit 101, an OTU4 framing unit 102, an FEC coding unit 103, an OTU4 scrambling unit 104, an OTU4 MLD unit 105, and a 20:10 MUX 106.

The OTU processing module at the receiving end may specifically include an ODU4 demapping unit 111, an OTU4 deframing unit 112, an FEC decoding unit 113, an OTU4 descrambling unit 114, an OTU4 MLD unit 115, and a 10:20 DEMUX 116.

The sending optical module may specifically include a 10:4 SerDes 107, two QPSK demodulators 108, and a polarization multiplexing unit 109.

The receiving optical module may specifically include a 4:10 SerDes 117, two QPSK demodulators 118, and a polarization demultiplexing unit 119.

For working procedures of components of the OTU processing module at the sending end, the OTU processing module at the receiving end, the receiving optical module, and the sending optical module, reference may be relevant description in Embodiment 1, and details will not be described here again.

When the FEC decoding unit 113 performs decoding, the pre-correction bit error rate feedback device 200 collects a statistic of an error correction bit rate of data bits of a signal corresponding to each virtual lane, calculates a pre-correction bit error rate of a physical lane corresponding to each virtual lane according to the error correction bit rate of the data bits of the signal corresponding to each virtual lane, and feeds back the pre-correction bit error rate to the receiving optical module.

The pre-correction bit error rate feedback device 200 calculates the pre-correction bit error rate of the physical lane corresponding to the virtual lanes according to the error correction bit rates of the data bits of the signal corresponding to each virtual lane. To be specific, the pre-correction bit error rate feedback device 200 obtains identification information of the virtual lanes, corresponding to the physical lanes, that are restored by the 10:20 DEMUX 116, accumulates the error correction bit rates of the virtual lanes identified by the identification information to obtain the pre-correction bit error rate of the physical lane corresponding to each virtual lane.

It can be understood by persons skilled in the art that, because a corresponding relationship exists between the virtual lanes and the physical lanes, the identification information of each virtual lane can be obtained during the FEC decoding only according to a channel distribution rule applied by the OTU4 MLD unit 105, and it is not required to obtain the identification information of the virtual lane from the 10:20 DEMUX 116.

In this embodiment, during calculation of the pre-correction bit error rate of each physical lane, the error correction bit rates of the data bits of the signals on all virtual lanes corresponding to each physical lane are accumulated. This accumulation may be carried out for data within a frame period. In other embodiments, this accumulation may be, however, carried out for data within a period shorter than the frame period, and also may be carried out for the data within a period longer than the frame period. In addition to accumulating the error correction bit rates of the virtual lanes corresponding to the physical lane to obtain the pre-correction bit error rate of the physical lane, the error correction bit rates of the virtual lanes corresponding to each physical lane may be averaged to obtain the pre-correction bit error rate of each physical lane.

The receiving optical module adjusts the receiving parameter of each physical lane according to the pre-correction bit error rate of each physical lane fed back by the pre-correction bit error rate feedback device 200. To be specific, a pre-emphasis parameter of each phase (channel I and channel Q) of the QPSK demodulator, a equalizer coefficient, and a threshold value of a decision circuit are adjusted so that the bit error rate of each physical lane is minimized and the performance of the receiving optical module is optimal.

In the scenario described in Embodiment 2, the pre-correction bit error rate feedback device 200 may also obtain BIP-8 information from the OTU4 deframing unit 112, and judge whether the BIP-8 information is correct. If the BIP-8 information is incorrect, the pre-correction bit error rate feedback device 200 feeds back a maximum bit error rate signal to the receiving optical module, where the maximum bit error rate signal indicates that the bit error rate is great and exceeds an FEC error correction range. According to the maximum bit error rate signal, the receiving optical module performs coarse adjustment. For example, the receiving optical module adjusts the pre-emphasis parameter of each phase (channel I and channel Q) of the QPSK demodulator, the equalizer coefficient, and the threshold value of the decision circuit until the BIP-8 information is correct.

In the scenario described in Embodiment 3, the pre-correction bit error rate feedback device 200 may also obtain CRC information when the FEC decoding unit 113 performs the FEC decoding, and judge whether the CRC information is correct. If the CRC information is incorrect, the pre-correction bit error rate feedback device 200 feeds back a maximum bit error rate signal to the receiving optical module, where the maximum bit error rate signal indicates that the bit error rate is great and exceeds the FEC error correction range. According to the maximum bit error rate signal, the receiving optical module performs coarse adjustment. For example, the receiving optical module adjusts the pre-emphasis parameter of each phase of the QPSK demodulator, the equalizer coefficient, and the threshold vale of the decision circuit until the CRC information is correct.

In the scenario described in Embodiment 4, the pre-correction bit error rate feedback device 200 may also obtain a framing failure signal from the OTU4 MLD unit 115 and feeds back the framing failure signal as a maximum bit error rate signal to the receiving optical module. According to the maximum bit error rate signal, the receiving optical module performs coarse adjustment. For example, the receiving optical module adjusts the pre-emphasis parameter of each phase of the QPSK demodulator, the equalizer coefficient, and the threshold value of the decision circuit until the OTU4 MLD unit 115 can perform framing normally.

The OTN apparatus provided in this embodiment is installed with a pre-correction bit error rate feedback device. Therefore, the error correction bit rate of the data bits of the signal corresponding to each virtual lane may be calculated, and the pre-correction bit error rate of the physical lane corresponding to each virtual lane can be calculated according to the error correction bit rate of the data bits of the signal corresponding to each virtual lane. The calculated pre-correction bit error rate of each physical lane is fed back to the receiving optical module. The receiving optical module can adjust the receiving parameter of each physical lane accordingly to reduce the pre-correction bit error rate of each physical lane, which improves the quality of each channel of signals demodulated by the receiving optical module. With the OTN apparatus provided in this embodiment, in the case that the bit error rate of data demodulated by the receiving optical module exceeds the FEC error correction range, the maximum bit error rate signal may be obtained through the pre-correction bit error rate feedback device, and then the receiving parameter of each physical in the receiving optical module is adjusted coarsely according to the maximum bit error rate signal. When the bit error rate of the demodulated data falls within the FEC error correction range, the pre-correction bit error rate of each physical lane is obtained through the feedback device for feeding back the pre-correction bit error rate, and then the receiving parameter of each physical lane in the receiving optical module is adjusted, which further improves the quality of each channel of signals demodulated by the receiving optical module.

In this embodiment, the pre-correction bit error rate feedback device 200 and the FEC decoding unit 113 are discrete. In other embodiments, the pre-correction bit error rate feedback device 200 may also be integrated into the FEC decoding unit 113, or a part of functions of the pre-correction bit error rate feedback device 200 is integrated into the FEC decoding unit 113. It should be noted that, in the present invention, for the convenience of description, the optical module is divided into a sending optical module and a receiving optical module according to functions of sending and receiving. In other scenarios, the optical module can perform both transmitting and receiving, so an entire optical module rather than the sending optical module and receiving optical module is visible, which also falls within the protection scope of the present invention.

### Embodiment 7

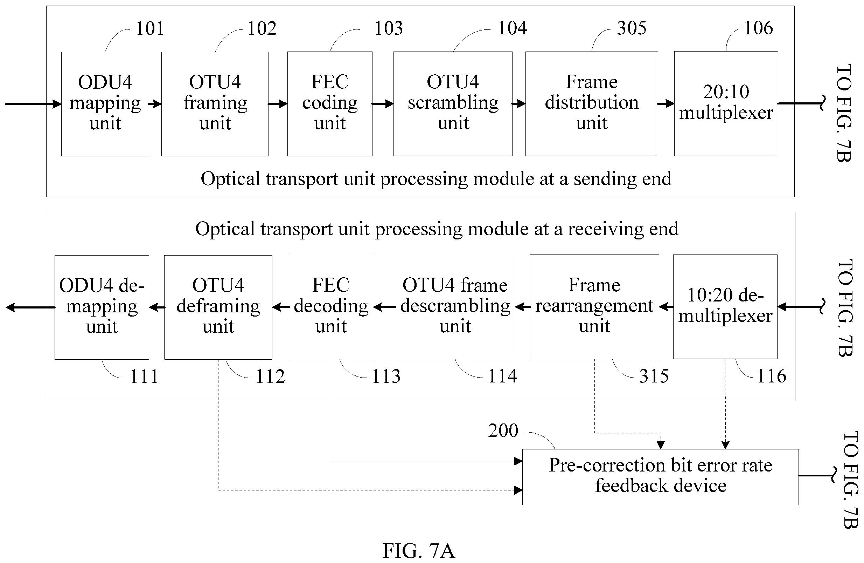

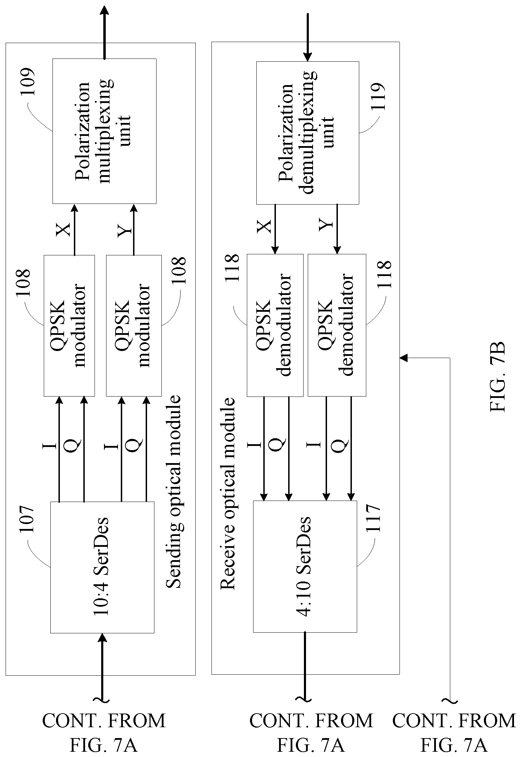

This embodiment provides another OTN apparatus, a structure of which is shown in FIG. 7. Compared with the OTN apparatus shown in Embodiment 6 and FIG. 6, the OTN apparatus provided in this embodiment replaces the OTU4 MLD unit 105 and the OTU4 MLD unit 115 in the OTN apparatus in Embodiment 6 and FIG. 6 with a frame distribution unit 305 at a frame distribution interface in a sending part and a frame rearrangement unit 315 in a receiving part respectively, and other parts are the same.

The frame distribution unit 305 is configured to distribute the OTU4 frame scrambled by the OTU4 scrambling unit 104 onto 20 virtual lanes in the unit of frame.

During the frame distribution, the frame distribution unit 305 distributes the OTU4 frame onto a corresponding virtual lane among the 20 virtual lanes according to a value of the third OA2 byte of an FAS in each OTU4 frame.

It should be noted that, a format of the FAS is OA1OA1OA1OA2OA2OA2, and the third OA2 is used in this embodiment.

The process of distributing the OTU4 frame onto the corresponding virtual lane among the 20 virtual lanes according to the value (ranging from 0 to 239) of the third OA2 byte of the FAS in each OTU4 frame may specifically include as follows. For each OTU4 frame, modulo 20 residue operation is performed on the third OA2 of the FAS. The obtained residue is a number of the virtual lane. Then, the OTU4 frame is distributed onto the virtual lane identified by the number of the virtual lane.

The 20:10 MUX 106 multiplexes the signals transmitted on the 20 virtual lanes into 10 channels of signals. The multiplexing rule is: multiplexing signal bits on every two virtual lanes into a signal on one channel.

The 10:4 SerDes 107 performs 10:4 multiplexing on the 10 channels of signals multiplexed by the 20:10 MUX 106 to multiplex the 10 channels of signals onto four physical lanes. The four physical lanes are channel I in an X polarization state, channel Q in the X polarization state, channel I in a Y polarization, and channel Q in the Y polarization state.

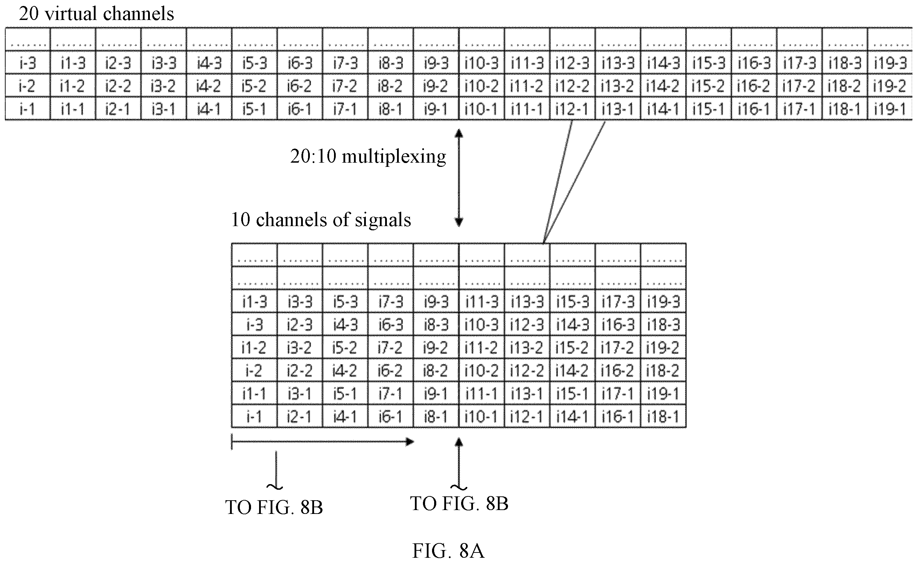

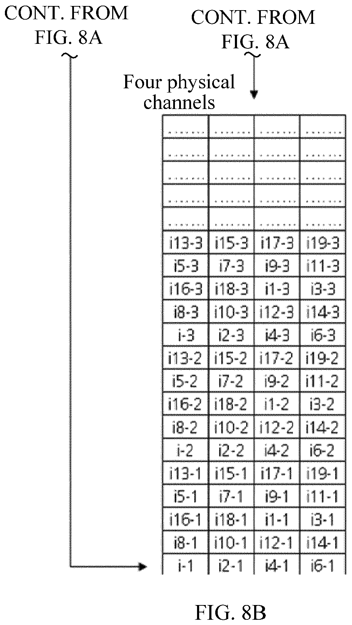

FIG. 8 shows the whole process for the frame distribution unit 305 to distribute the scrambled OTU4 frame onto 20 virtual lanes and for the 10:4 SerDes 107 to obtain signals transmitted on the four physical lanes. The i n-k in each block in FIG. 5 represents the k^{th} bit of the n^{th} OTU4 frame, where n = 0, 1, 2...19, and k = 1, 2, 3, ..., 130560. It can be seen from data transmitted on the four physical lanes shown in FIG. 8 that, each physical lane has five-frame interleaved bits and each bit of each of the five frames may be transmitted on this physical lane. For example, i-1, i8-1, i16-5, i5-1, and il3-1 in the first column from the left in the table in the bottom of FIG. 8 correspond to frame 0, frame 8, frame 16, frame 5, frame 13 respectively; i-2, i8-2, i16-2, and i5-2 correspond to frame 0, frame 8, frame 16, frame 5, and frame 13 respectively. The rest may be deducted by analogy. That is, frame 0, frame 8, frame 16, frame 5, and frame 13 are on the physical lane in the first column from the left. In addition, it can be seen from FIG. 5 that, these five frames do not appear on the physical lanes corresponding to other three columns. That is, the bits of these frames are distributed onto this physical lane. Accordingly, the data of each OTU4 frame is transmitted on one physical lane.

Correspondingly, the 4:10 SerDes 117 performs 4:10 demultiplexing on signals on the four physical lanes obtained by two QPSK demodulators to obtain 10 channels of signals. The 10:20 DEMUX 116 performs 1:2 bit demultiplexing on the 10 channels of signals to restore the signals transmitted on the 20 virtual lanes. The frame rearrangement unit 315 performs frame alignment and rearrangement on the signals on the 20 virtual lanes restored by the 10:20 DEMUX 116 to restore the OTU4 frame signal. The frame alignment and rearrangement performed by the frame rearrangement unit 315 are performed in the unit of frame.

The pre-correction bit error rate feedback device 200 feeds back the obtained pre-correction bit error rate of each physical lane to the receiving optical module as a feedback signal so that the receiving optical module adjusts the receiving parameter of each physical lane accordingly, thereby improving the quality of each channel of signals demodulated by the receiving optical module and improving the receiving performance of the receiving optical module. For the structure and working process of the pre-correction bit error rate feedback device 200, reference may be made to relevant description in Embodiment 5. The details will not be described here again.

It should be noted that in this embodiment, the OTU4 framing is implemented by the frame rearrangement unit 315. In the similar case of framing failure described in Embodiment 4 or Embodiment 5, the pre-correction bit error rate feedback device in this embodiment specifically obtains a framing failure signal from the frame rearrangement unit 315.

The OTN provided in this embodiment is installed with a pre-correction bit error rate feedback device. Therefore, the receiving parameter of each physical lane in the receiving optical module can be adjusted according to the pre-correction bit error rate of each physical lane that is fed back by the pre-correction bit error rate feedback device, which improves the quality of each channel of signals demodulated by the receiving optical module. In addition, because the OTN apparatus provided in this embodiment distributes the scrambled OTU4 frame on each virtual lane in the unit of frame during the data processing by the OTU at the sending end, data transmitted on each physical lane is data transmitted on fixed virtual lanes, so that data of each frame is modulated to a carrier only through one physical lane for transmission, which simplifies data processing by the OTU at the receiving end, especially data processing by the pre-correction bit error rate feedback device 200. For example, the pre-correction bit error rate feedback device 200 may not need to obtain the identification information of the virtual lanes corresponding to each physical lane from the 10:20 DEMUX 116 in real time. The identification information of the virtual lanes and the corresponding information between the virtual lane and the physical lane may be configured manually in the pre-correction bit error rate feedback device 200 or in the system information statically. The virtual lane and physical lane corresponding to the frame may be judged according to the value of the third OA2 byte of the FAS in the OTU4 frame. It can be seen from FIG. 8 that, interleaved bits of five frames are carried on each physical lane. In the case that the burst consecutive bit error codes are distributed onto the neighboring five OTU4 frames, the OTN apparatus provided in this embodiment has powerful capability of FEC burst consecutive bit error correction.

### Embodiment 8

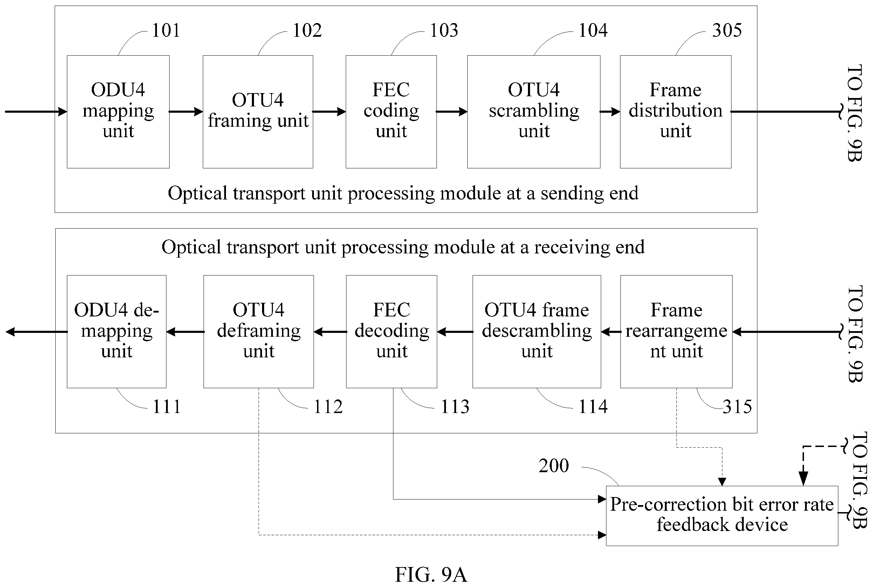

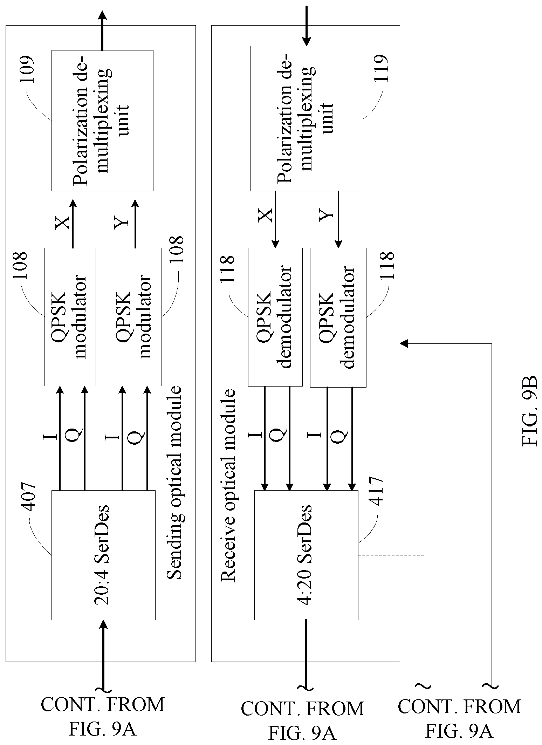

This embodiment provides an OTN apparatus, a structure of which is shown in FIG. 9. The OTN apparatus in the embodiment replaces the 20:10 MUX 106, 10:4 SerDes 107, 4:10 SerDes 117, and 10:20 DEMUX 116 in the OTN apparatus shown in Embodiment 7 and FIG. 7 with a 20:4 SerDes 407 and a 4:20 SerDes 417, and other parts are the same.

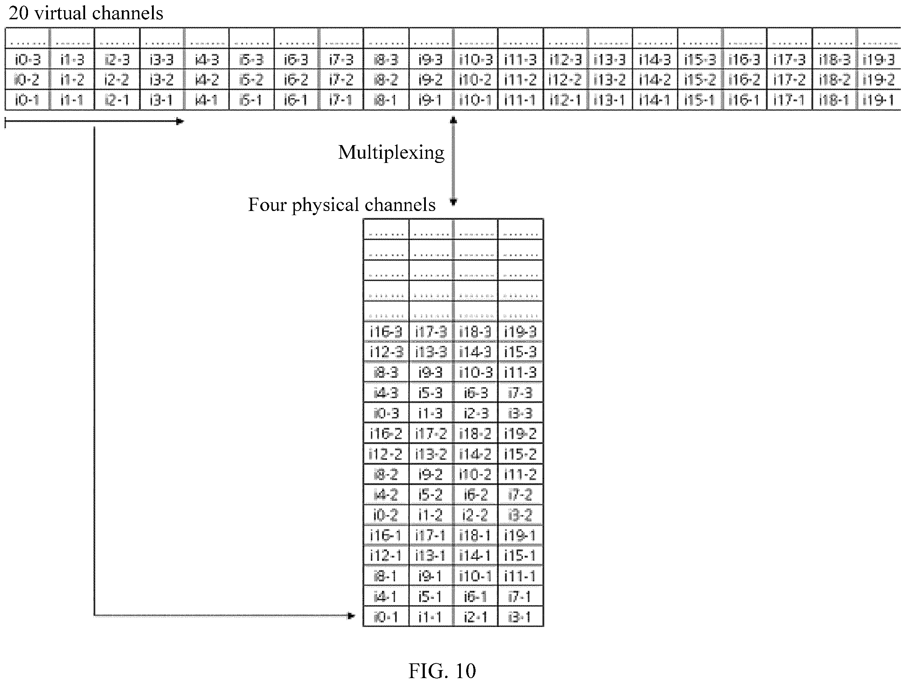

The 20:4 SerDes 407 multiplexes the signals transmitted on the 20 virtual lanes obtained by the frame distribution unit 305 onto four physical lanes. The multiplexing rule is: multiplexing bits of signals transmitted on every five virtual lanes onto one physical lane, for example, multiplexing bits of signals transmitted on virtual lanes 0, 4, 8, 12, 16 onto one physical lane. For the specific multiplexing process, reference may be made to FIG. 10.

Correspondingly, the 4:20 SerDes 417 demultiplexes the signals transmitted on four physical lanes to restore the signals transmitted on the 20 virtual lanes. The demultiplexing process is reverse to the multiplexing process in the 20:4 SerDes 407.

In addition to the advantages of the OTN apparatus provided in Embodiment 7, the OTN apparatus in this embodiment simplifies the multiplexing and demultiplexing processes and improves the processing efficiency of the OTN apparatus by using the 20:4 SerDes 407 and the 4:20 SerDes 417.

It should be noted that in this embodiment, the 20:4 SerDes 407 and the 4:20 SerDes 417 are installed in the sending optical module and the receiving optical module respectively. It can be understood that the 20:4 SerDes 407 and the 4:20 SerDes 417 may also be installed in the OTU processing module at the sending end and the OTU processing module at the receiving end respectively.

It should be noted that in this embodiment, the OTU4 framing is implemented by the frame rearrangement unit 315. In the similar case of framing failure described in Embodiment 4 or Embodiment 5, the pre-correction bit error rate feedback device in this embodiment obtains a framing failure signal from the frame rearrangement unit 315.

In Embodiment 7, the functions implemented by the 20:10 MUX 106 and the 10:4 SerDes 107 in cooperation are similar to the functions implemented by the 20:4 SerDes 407 in this embodiment: The signals transmitted on the 20 virtual lanes are multiplexed onto four physical lanes. In a modularization design, the 20:10 MUX 106 and the 10:4 SerDes 107 are integrated into a multiplexing module to implement the multiplexing function. In the actual application in Embodiment 7, to be specific, the signals transmitted on the 20 virtual lanes are multiplexed onto four physical lanes. Definitely, the 20:4 SerDes 407 in this embodiment may also be designed to a multiplexing module separately. Correspondingly, the 4:10 SerDes 117 and the 10:20 DEMUX 116 in Embodiment 7 are integrated into a demultiplexing module. The 4:20 SerDes 417 in this embodiment may also be designed to a demultiplexing module separately.

### Embodiment 9

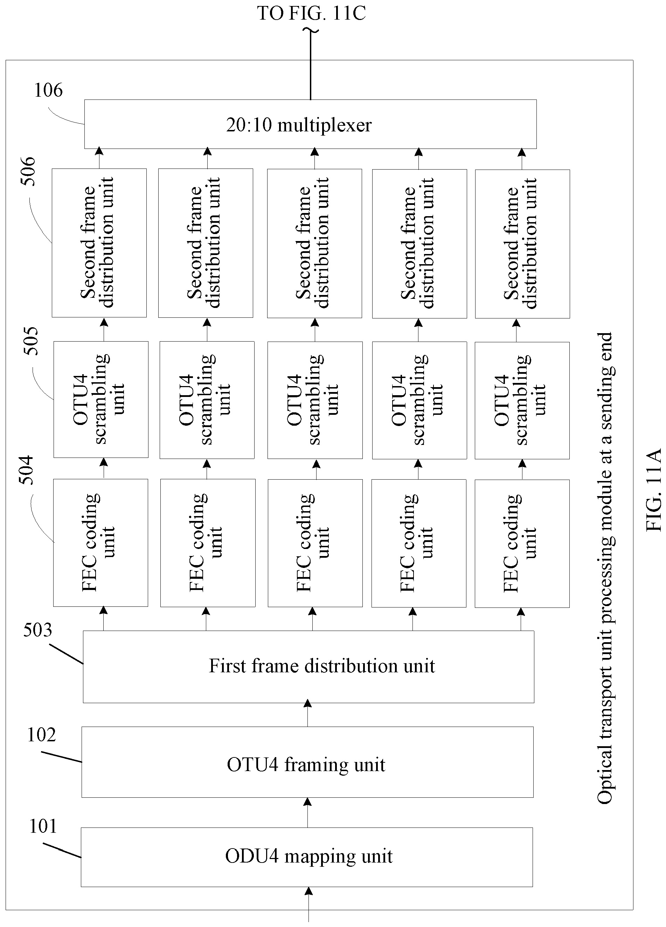

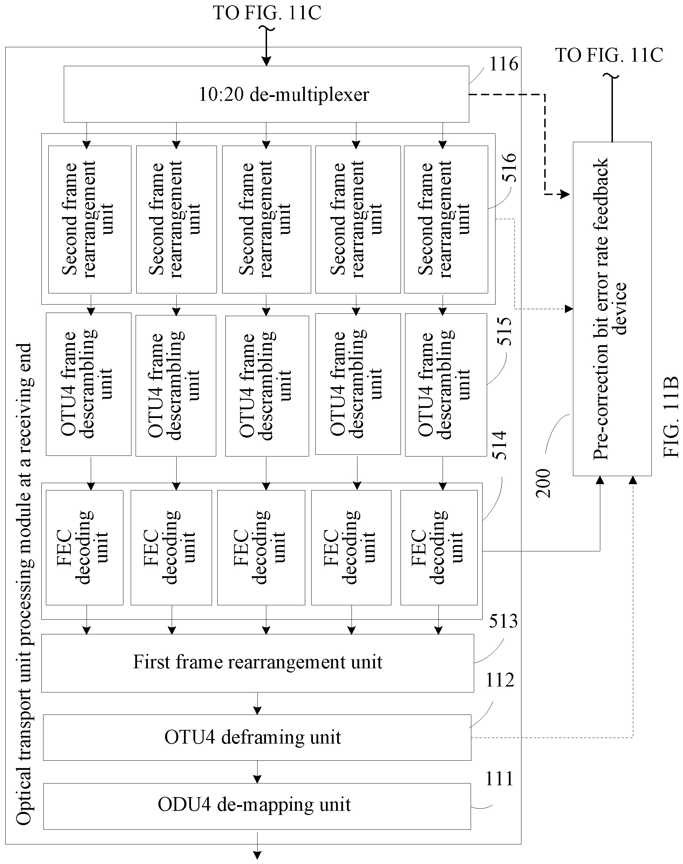

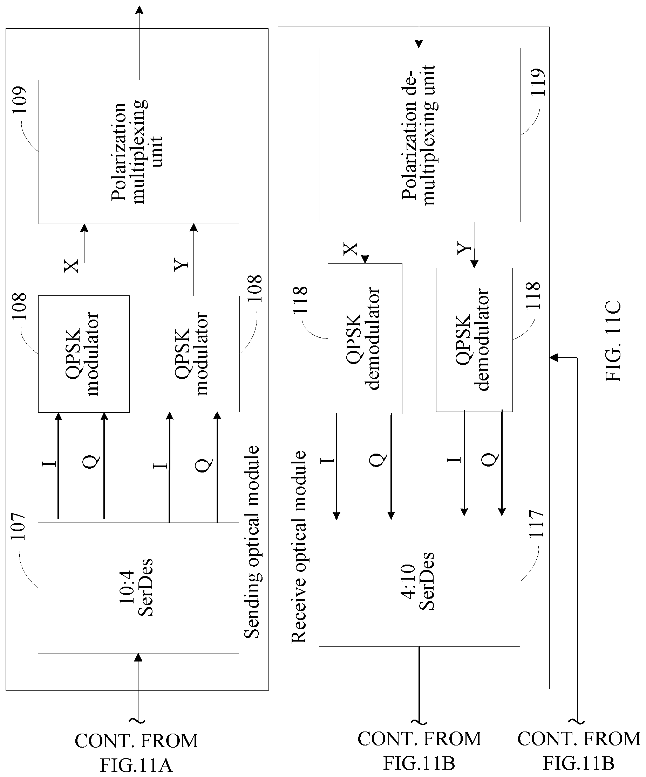

This embodiment further provides an OTN apparatus, a structure of which is shown in FIG. 11. During OTU processing at the sending end, the OTN apparatus in this embodiment replaces the FEC decoding unit 103, the OTU4 scrambling unit 104, and the frame distribution unit 305 in the OTN apparatus described in Embodiment 7 and FIG. 7 with a first frame distribution unit 503, five parallel FEC decoding units 504, five parallel OTU4 scrambling units 505, and five parallel second frame distribution units 506. During the OTU processing at the receiving end, the OTN apparatus in this embodiment replaces the FEC decoding unit 113, the OTU4 descrambling unit 114, and the frame rearrangement unit 315 in the OTN apparatus described in Embodiment 7 and FIG. 7 with a first frame rearrangement unit 513, five parallel FEC decoding units 514, five parallel OTU4 descrambling units 515, and five parallel second frame rearrangement units 506. Other parts of the OTN apparatus in this embodiment are the same as the corresponding parts of the OTN apparatus in Embodiment 7.

During OTU processing at the sending end, the first frame distribution unit 503 distributes a serial OTU4 frame signal obtained by the OTU4 framing unit 102 into five channels of parallel OTU4 frame signals in the unit of frame. The distribution is performed according to a value of the third OA2 byte of the FAS in the OTU4 frame. An operation of calculating a residue for the value of the OA2 byte modulo 5 is performed. If a residue for a value of the third OA2 bytes of frames having modulo 5 is 0, the frames are distributed onto the same channel. For example, the OTU4 frames with the third OA2 bytes 0, 5, 10, and 15 are distributed onto the same channel. In the case of other residues, the frames are also distributed in this manner.

The five parallel FEC decoding units 504 perform FEC coding on the five channels of parallel OTU4 frame signals respectively.

The five parallel OTU4 scrambling units 505 scramble the five channels of parallel FEC-coded OTU4 frame signals respectively.

The five second frame distribution units 506 distribute the five channels of parallel scrambled OTU4 frame signals onto 20 virtual lanes. The distribution rule may specifically be: distributing the scrambled signal on each channel onto four virtual lanes in turn in unit of frame.

During the OTU processing at the receiving end, the five parallel second frame rearrangement units 516 performs frame alignment and rearrangement on the signals transmitted on the 20 virtual lanes restored by the 10:20 DEMUX 116 to restore the five channels of parallel signals.

The five parallel OTU4 descrambling units 515 descramble the five channels of parallel restored signals respectively.

The five parallel FEC decoding units 514 perform FEC decoding on the five channels of parallel descrambled signals respectively.

The first frame rearrangement unit 513 performs framing and rearrangement on the five channels of parallel signals to obtain one channel of serial OTU4 frames through combination, and then sends the frames to the OTU4 deframing unit for subsequent processing.

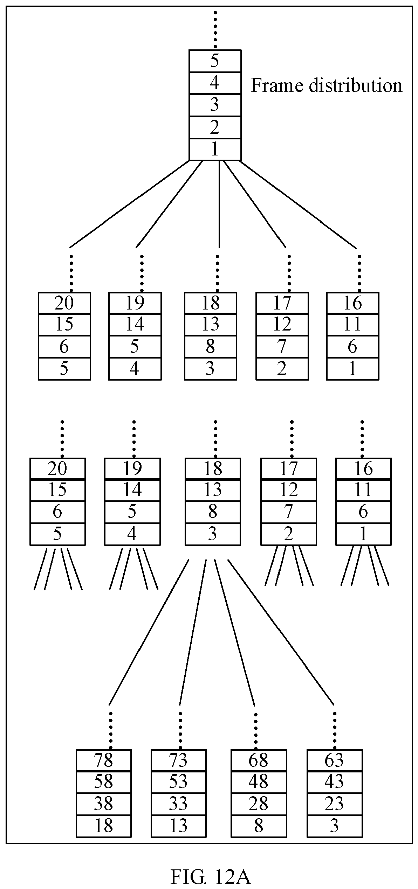

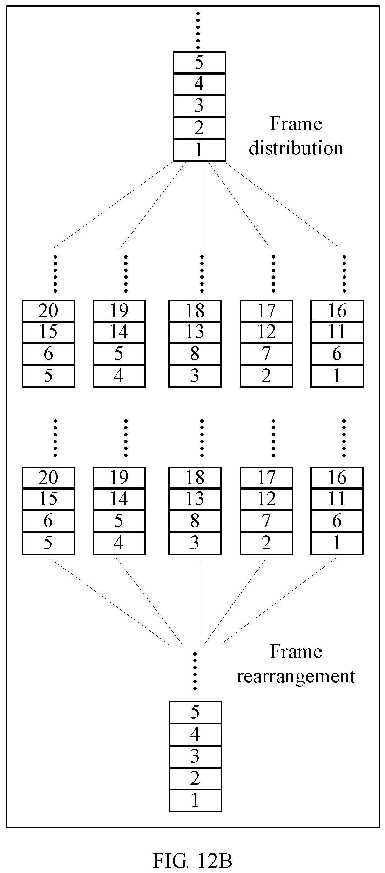

FIG. 12A shows the frame distribution process performed by the first frame distribution unit 503 and the five second frame distribution units 506. FIG. 12B shows the frame rearrangement process performed by the first frame rearrangement unit.

In this embodiment, the pre-correction bit error rate feedback device 200 is specifically configured to collect a statistic of an error correction bit rate of data bits of a signal corresponding to each virtual lane when each FEC decoding unit 514 performs the FEC decoding, calculate a pre-correction bit error rate of a physical lane corresponding to each virtual lane according to the error correction bit rate of the data bits of the signal corresponding to each virtual lane, and feed back the calculated pre-correction bit error rate of each physical lane to the receiving optical module. The receiving optical module adjusts the receiving parameter of each physical lane according to the fed back pre-correction bit error rate to reduce the pre-correction bit error rate of each physical lane. In this embodiment, for the specific structure and working process of the pre-correction bit error rate feedback device 200, reference may be made to relevant description in Embodiment 5 and FIG. 5.

It should be noted that in this embodiment, in the similar case of framing failure in Embodiment 4 or Embodiment 5, the pre-correction bit error rate feedback device 200 obtains the framing failure signal from the five parallel second frame rearrangement units 516. The framing failure signal may be obtained from one or all of the five parallel frame rearrangement units 516, which is not limited in the present application.

In addition to the advantage of the OTN apparatus in Embodiment 7, the OTN apparatus provided in this embodiment converts one channel of high-speed serial OTU4 signals into five channels of low-speed parallel OTU4 signals. The subsequent processing (such as FEC coding and OTU4 scrambling) is based on the five channels of low-speed parallel OTU4 signals. Therefore, requirements for the performance of components for implementing the processing are decreased, and the implementation difficulty of the OTN apparatus is decreased.

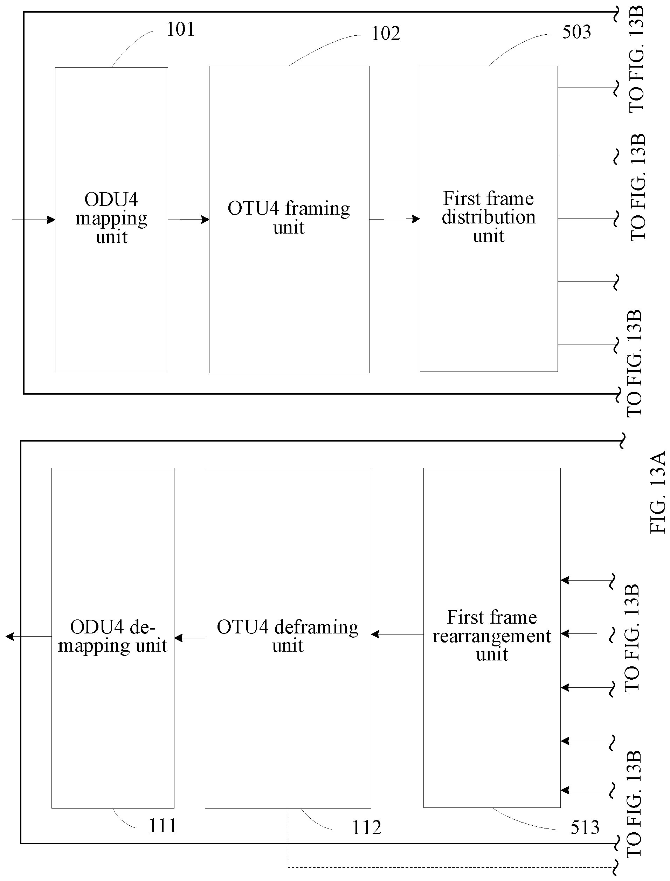

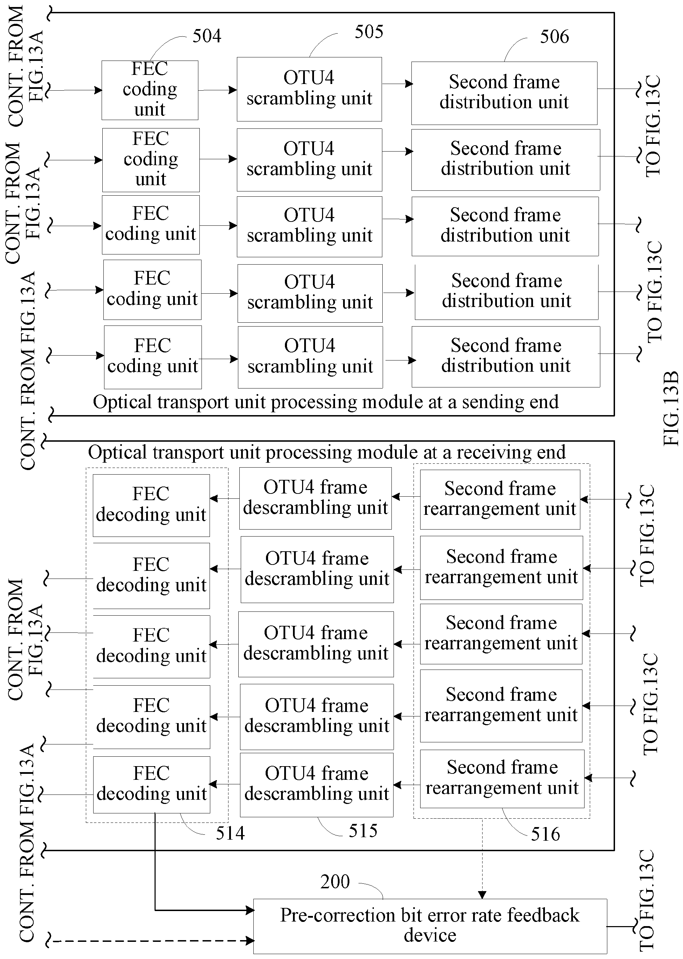

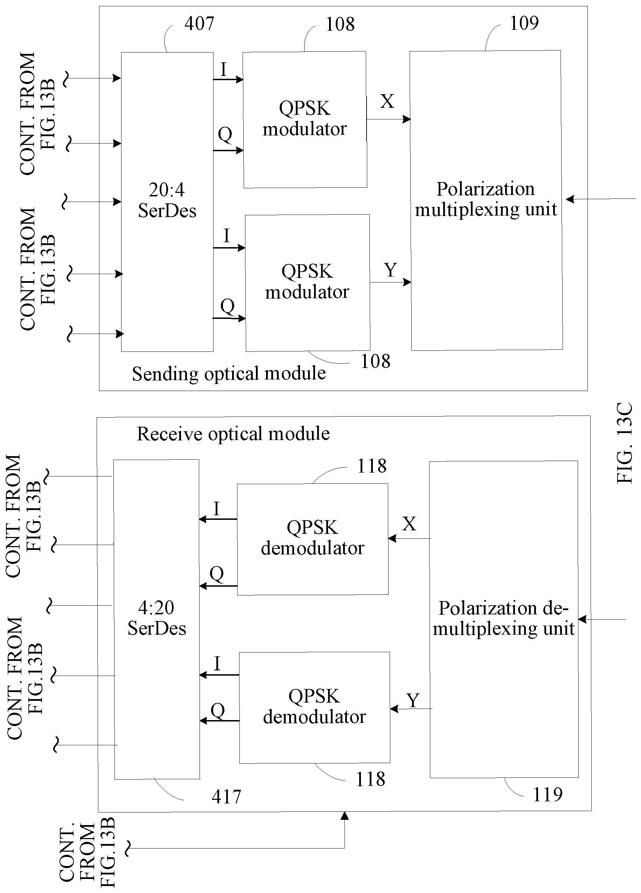

A structure of an OTN apparatus provided in another embodiment is shown in FIG. 13. In this OTN apparatus, the 20:10 MUX 106, 10:4 SerDes 107, 4:10 SerDes 117, and 10:20 DEMUX 116 are replaced with the 20:4 SerDes 407 and 4:20 SerDes 417 respectively. For the detailed processing of the 20:4 SerDes 407 and 4:20 SerDes 417, reference may be made to relevant description in Embodiment 8.

In this embodiment, the serial OTU4 frame signal obtained by the OTU4 framing unit 102 are distributed into five channels of the parallel OTU4 signals in the unit of frame; each second frame distribution unit 506 distributes one channel of the scrambled OTU4 frame signal of the five channels of scrambled OTU4 frame signals onto four virtual lanes in the unit of frame, and then the signals transmitted on the 20 virtual lanes are multiplexed onto four physical lanes. However, the distribution method by the first frame distribution unit 503 and the second frame distribution unit 506 is not limited to the distribution method provided in this embodiment. According to the actual requirements, the first frame distribution unit 503 distributes the serial OTU4 frame signal obtained by the OTU4 framing unit 102 into L parallel channels of OTU4 frame signals; each second frame distribution unit 506 distributes one channel of scrambled OTU4 frame signals in the L channels of scrambled OTU4 frame signals onto M virtual lanes in the unit of frame, and then multiplexes the signals transmitted on the L × M virtual lanes onto N physical lanes, where L, M, and N are integers and greater than 1.

### Embodiment 10

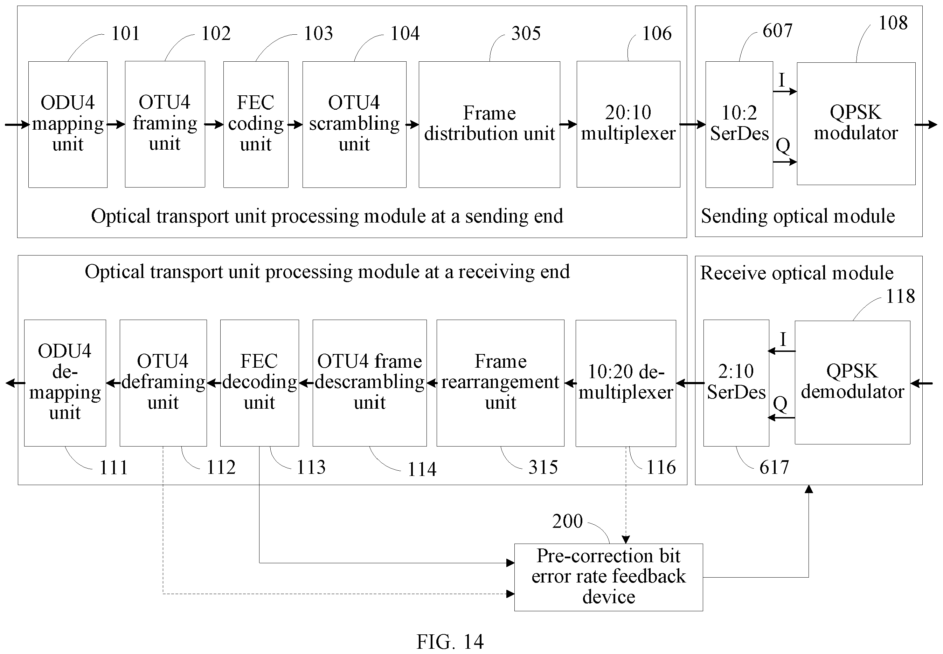

This embodiment provides another OTN apparatus, a structure of which is shown in FIG. 14. the OTN apparatus in this embodiment differs from the OTN apparatus described in Embodiment 7 in that the sending optical module includes an QPSK modulator 108 and a 10:2 SerDes 607 and the receiving optical module includes an QPSK demodulator 118 and a 2:10 SerDes 617.

The 10:2 SerDes 607 performs 10:2 multiplexing on the 10 channels of signals obtained by the 20:10 MUX 106 to multiplex the signals onto two physical lanes (channel I and channel Q).The QPSK modulator performs the QPSK modulation on the optical carrier according to data transmitted on the two physical lanes (channel I and channel Q) to obtain a QPSK modulated signal. The 10:2 multiplexing performed by the 10:2 SerDes 607 is similar to the 10:4 multiplexing in other embodiments. The details will not be described here again.

The QPSK demodulator 118 performs the QPSK demodulation on the QPSK modulated signal sent by the OTN apparatus at the peer end to restore the data transmitted on the two physical lanes (channel I and channel Q).The 2:10 SerDes 617 performs the 2:10 demultiplexing on the data transmitted on the two physical lanes to obtain the 10 channels of signals. The 2:10 demultiplexing performed by the 2:10 SerDes 607 is similar to the 4:10 demultiplexing in other embodiments, and is reverse to the 10:2 multiplexing performed by the 10:2 SerDes 607. The details will not be described here again.

In this embodiment, for processing of each part in the OTU processing module, reference may be made to description of a corresponding part in Embodiment 7.

In addition to the advantage of the OTN apparatus in Embodiment 7, the OTN apparatus provided in this embodiment simplifies the signal processing in the sending optical module and the receiving optical module.

In another embodiment, the 20:10 MUX 106 and 10:2 SerDes 607 in this embodiment are replaced with the 20:2 SerDes , and the 2:10 SerDes and the 10:20 DEMUX 116 in this embodiment are replaced with the 2:20 SerDes.

Furthermore, referring to description in Embodiment 9, the FEC coding unit 103, the OTU4 scrambling unit 104, and the frame distribution unit 305 in the OTU processing module at the sending end in this embodiment are replaced with a first frame distribution unit, five parallel FEC coding units, five OTU4 scrambling units, and five parallel second frame distribution units; the FEC decoding unit 113, the OTU4 descrambling unit 114, and the frame arrangement unit 315 in the OTU processing module at the receiving end in this embodiment are replaced with a first frame arrangement unit, five parallel FEC decoding units, five OTU4 descrambling units, and five parallel second frame arrangement units. In this case, because a part of OTU processing is directed to the parallel signals, requirements for the performance of components for implementing the processing are decreased and the implementation difficulty of the OTN apparatus is decreased.

The preceding embodiments are all directed to the OTU4 frame. It can be understood that the present invention is also applicable to OTUs with other orders. According to the preceding embodiments, although the modulator in sending optical module is the QPSK modulator and the demodulator in the receiving optical module is the QPSK demodulator, the embodiments of the present invention are also applicable if the modulator in the sending optical module is a DQPSK modulator and the demodulator in the receiving optical module is a DQPSK demodulator.

The embodiments of the present invention are mainly applied in the field of communications technologies. With the development of the network technology, the embodiments of the present invention are likely to be applied in other scenarios or other similar technical fields.

Through the preceding embodiments of the present invention, persons skilled in the art can clearly understood that the present invention can be implemented through software in combination with necessary hardware platform, and can also be implemented through the hardware. In most cases, the former is, however, is the preferred embodiment. Based on such understanding, all or part of the technical solution under the present invention that makes contributions to the prior art may be essentially embodied in the form of a software product. The software product may be stored in a readable storage medium, such as a floppy disk, a hard disk, and an optical disc of a computer, and includes a number of instructions that enable an apparatus to execute the methods provided in the embodiments of the present invention.

The above is only the specific implementation of the present invention, but the protection scope of the present invention is not limited thereto. Any change or replacement that can be easily figured out by persons skilled in the art within the technical scope disclosed by the present invention shall be covered by the protection scope of the present invention. Therefore, the protection scope of the present invention is defined by the appended claims.

## Claims

1. A method for improving signal quality, comprising:
at a sending end, distributing a scrambled optical transport unit frame signal onto multiple signals transmitted on corresponding virtual lanes in unit of frame, and multiplexing the signals transmitted on the virtual lanes to obtain signals transmitted on corresponding physical lanes;
at a receiving end, demultiplexing the signals signal transmitted on the physical lanes to obtain the signals transmitted on each corresponding virtual lane, and rearranging the signals signal transmitted on the virtual lanes to restore the optical transport unit frame signal;
collecting (S1) a statistic of an error correction bit rate of data bits of a signal corresponding to each virtual lane during forward error correction FEC decoding;
calculating (S2) a pre-correction bit error rate of each physical lane corresponding to each virtual lane according to the error correction bit rate of the data bits of the signal corresponding to each virtual lane;
feeding (S3) back the pre-correction bit error rate of each physical lane to an optical module, wherein the optical module is at the receiving end; and
adjusting (S4), by the optical module, a receiving parameter of each physical lane to reduce the pre-correction bit error rate of each physical lane.

2. An optical transport network system, comprising, at a sending end :
a frame distribution unit, configured to distribute a scrambled optical transport unit frame signal onto multiple signals transmitted on corresponding virtual lanes in unit of frame;
a multiplexing module, configured to multiplex the signals transmitted on the virtual lanes to obtain signals transmitted on corresponding physical lanes;
at a receiving end:
a demultiplexing module, configured to demultiplex the signals transmitted on the physical lanes to obtain the signals transmitted on each corresponding virtual lane;
a frame rearrangement unit, configured to perform frame rearrangement on the signals transmitted on the virtual lanes and obtained by the demultiplexing module to restore the optical transport unit frame signal; and
a pre-correction bit error rate feedback device (200), configured to collect a statistic of an error correction bit rate of data bits of a signal corresponding to each virtual lane during FEC decoding, calculate a pre-correction bit error rate of each physical lane corresponding to each virtual lane according to the error correction bit rate of the data bits of the signal corresponding to each virtual lane, and feed back the pre-correction bit error rate to an optical module at the receiving end;
the optical module at the receiving end, configured to receive a pre-correction bit error rate of each physical lane fed back by the pre-correction bit error rate feedback device, and to adjust a receiving parameter of each physical lane according to the pre-correction bit error rate of each physical lane to reduce the pre-correction bit error rate of each physical lane.

3. The system according to claim 2, wherein the pre-correction bit error rate feedback device comprises:
a statistic collection unit (201), configured to collect the statistic of an error correction bit rate of data bits of a signal corresponding to each virtual lane during FEC decoding;
a calculation unit (202), configured to calculate the pre-correction bit error rate of the physical lane corresponding to each virtual lane according to the error correction bit rate of the data bits of the signal on each virtual lane; and
a feedback unit (203), configured to feed back the pre-correction bit error rate of each physical lane to the optical module so that the optical module adjusts the receiving parameter of each physical lane to reduce the pre-correction bit error rate of each physical lane.

## Patentansprüche

1. Verfahren zum Verbessern einer Signalqualität, Folgendes umfassend:
an einem Sendeende, Verteilen eines verwürfelten optischen Transporteinheitsrahmensignals auf mehrere Signale, die auf entsprechenden virtuellen Spuren in einer Einheit eines Rahmens übertragen werden, und Multiplexen der Signale, die auf den virtuellen Spuren übertragen werden, um Signale zu erhalten, die auf entsprechenden physischen Spuren übertragen werden;
an einem Empfangsende, Demultiplexieren der Signale, die auf den physischen Spuren übertragen werden, um die Signale zu erhalten, die auf jeder entsprechenden virtuellen Spur übertragen werden, und Umordnen der Signale, die auf den virtuellen Spuren übertragen werden, um das optische Transporteinheitsrahmensignal wiederherzustellen;
Sammeln (S1) einer Statistik einer Fehlerkorrekturbitrate von Datenbits eines Signals, das jeder virtuellen Spur während einer Decodierung einer Fehlerkorrektur bei Weiterleitung (*forward error correction* - FEC) entspricht;
Berechnen (S2) einer Vorkorrekturbitfehlerrate jeder physischen Spur, die jeder virtuellen Spur entspricht, gemäß der Fehlerkorrekturbitrate der Datenbits des Signals, das jeder virtuellen Spur entspricht;
Rückkoppeln (S3) der Vorkorrekturbitfehlerrate jeder physischen Spur an ein optisches Modul, wobei sich das optische Modul an dem Empfangsende befindet; und
Anpassen (S4) eines Empfangsparameters jeder physischen Spur durch das optische Modul, um die Vorkorrekturbitfehlerrate jeder physischen Spur zu verringern.

2. Optisches Transportnetzwerksystem, an einem Sendeende Folgendes umfassend:
eine Rahmenverteilungseinheit, die konfiguriert ist, um ein verwürfeltes optisches Transporteinheitsrahmensignal auf mehrere Signale zu verteilen, die auf entsprechenden virtuellen Spuren in der Einheit des Rahmens übertragen werden; ein Multiplexmodul, das konfiguriert ist, um die Signale zu multiplexen, die auf den virtuellen Spuren übertragen werden, um Signale zu erhalten, die auf entsprechenden physischen Spuren übertragen werden;
an einem Empfangsende:
ein Demultiplexmodul, das konfiguriert ist, um die Signale zu demultiplexen, die auf den physischen Spuren übertragen werden, um die Signale zu erhalten, die auf jeder entsprechenden virtuellen Spur übertragen werden;
eine Rahmenumordnungseinheit, die konfiguriert ist, um eine Rahmenumordnung auf den Signalen durchzuführen, die auf den virtuellen Spuren übertragen werden und durch das Demultiplexmodul erhalten werden, um das optische Transporteinheitsrahmensignal wiederherzustellen; und
eine Vorkorrekturbitfehlerratenrückkopplungsvorrichtung (200), die konfiguriert ist, um eine Statistik einer Fehlerkorrekturbitrate von Datenbits eines Signals zu sammeln, das jeder virtuellen Spur während der FEC-Decodierung entspricht, um eine Vorkorrekturbitfehlerrate jeder physischen Spur, die jeder virtuellen Spur entspricht, gemäß der Fehlerkorrekturbitrate der Datenbits des Signals, das jeder virtuellen Spur entspricht, zu berechnen, und um die Vorkorrekturbitfehlerrate an ein optisches Modul an dem Empfangsende rückzukoppeln;
das optische Modul an dem Empfangsende, das konfiguriert ist, um eine Vorkorrekturbitfehlerrate jeder physischen Spur, die durch die Vorkorrekturbitfehlerratenrückkopplungsvorrichtung rückgekoppelt wird, zu empfangen und um einen Empfangsparameter jeder physischen Spur gemäß der Vorkorrekturbitfehlerrate jeder physischen Spur anzupassen, um die Vorkorrekturbitfehlerrate jeder physischen Spur zu verringern.

3. System nach Anspruch 2, wobei die Vorkorrekturbitfehlerratenrückkopplungsvorrichtung Folgendes umfasst:
eine Statistiksammlungseinheit (201), die konfiguriert ist, um die Statistik einer Fehlerkorrekturbitrate von Datenbits eines Signals, das jeder virtuellen Spur entspricht, während der FEC-Decodierung zu sammeln;
eine Berechnungseinheit (202), die konfiguriert ist, um die Vorkorrekturbitfehlerrate der physischen Spur, die jeder virtuellen Spur entspricht, gemäß der Fehlerkorrekturbitrate der Datenbits des Signals auf jeder virtuellen Spur zu berechnen; und
eine Rückkopplungseinheit (203), die konfiguriert ist, um die Vorkorrekturbitfehlerrate jeder physischen Spur an das optische Modul derart rückzukoppeln, dass das optische Modul den Empfangsparameter jeder physischen Spur anpasst, um die Vorkorrekturbitfehlerrate jeder physischen Spur zu verringern.

## Revendications

1. Procédé pour améliorer la qualité de signal, consistant à :
au niveau d'une une extrémité émettrice, distribuer un signal de trame d'unité de transport optique brouillée sur plusieurs signaux transmis sur des voies virtuelles correspondantes dans une unité de trame, et multiplexer les signaux transmis sur les voies virtuelles pour obtenir des signaux transmis sur des voies physiques correspondantes ;
au niveau d'une une extrémité réceptrice, démultiplexer les signaux transmis sur les voies physiques pour obtenir les signaux transmis sur chaque voie virtuelle correspondante, et réarranger les signaux émis sur les voies virtuelles pour restaurer le signal de trame d'unité de transport optique ;
collecter (S1) une statistique d'un débit binaire de correction d'erreur de bits de données d'un signal correspondant à chaque voie virtuelle lors d'un décodage de correction des erreurs de transfert FEC ;
calculer (S2) un taux d'erreur binaire de précorrection de chaque voie physique correspondant à chaque voie virtuelle en fonction du débit binaire de correction d'erreur des bits de données du signal correspondant à chaque voie virtuelle ;
renvoyer (S3) le taux d'erreur binaire de précorrection de chaque voie physique à un module optique, le module optique se trouvant à l'extrémité réceptrice ; et
ajuster (S4), par le module optique, un paramètre récepteur de chaque voie physique afin de réduire le taux d'erreur binaire de précorrection de chaque voie physique.

2. Système de réseau de transport optique, comprenant, à une extrémité émettrice :
une unité de distribution de trame, configurée pour distribuer un signal de trame d'unité de transport optique brouillée sur plusieurs signaux transmis sur des voies virtuelles correspondantes dans une unité de trame ;
un module de multiplexage, configuré pour multiplexer les signaux transmis sur les voies virtuelles afin d'obtenir des signaux transmis sur des voies physiques correspondantes ; au niveau d'une extrémité réceptrice :
un module de démultiplexage, configuré pour démultiplexer les signaux transmis sur les voies physiques afin d'obtenir les signaux transmis sur chaque voie virtuelle correspondante ;
une unité de réarrangement de trame, configurée pour effectuer un réarrangement de trame sur les signaux transmis sur des voies virtuelles et obtenus par le module de démultiplexage pour restaurer le signal de trame d'unité de transport optique ; et
un dispositif de rétroaction de taux d'erreur binaire de précorrection (200), configuré pour collecter une statistique d'un débit binaire de correction d'erreur de bits de données d'un signal correspondant à chaque voie virtuelle pendant un décodage FEC, calculer un taux d'erreur de bits de précorrection de chaque voie physique correspondant à chaque voie virtuelle en fonction du débit binaire de correction d'erreur des bits de données du signal correspondant à chaque voie virtuelle, et renvoyer le taux d'erreur binaire de précorrection à un module optique à l'extrémité réceptrice ;
le module optique de l'extrémité réceptrice étant configuré pour recevoir un taux d'erreur de binaire précorrection de chaque voie physique renvoyé par le dispositif de rétroaction de taux d'erreur binaire de précorrection, et pour ajuster un paramètre récepteur de chaque voie physique en fonction du taux d'erreur binaire de précorrection de chaque voie physique afin de réduire le taux d'erreur binaire de précorrection de chaque voie physique.

3. Système selon la revendication 2, dans lequel le dispositif de rétroaction de taux d'erreur binaire de précorrection comprend :
une unité de collecte de statistiques (201), configurée pour collecter la statistique d'un débit binaire de correction d'erreur de bits de données d'un signal correspondant à chaque voie virtuelle pendant un décodage FEC ;
une unité de calcul (202) configurée pour calculer le taux d'erreur binaire de précorrection de la voie physique correspondant à chaque voie virtuelle en fonction du débit binaire de correction d'erreur des bits de données du signal sur chaque voie virtuelle ; et
une unité de rétroaction (203), configurée pour renvoyer le taux d'erreur binaire de précorrection de chaque voie physique au module optique, de sorte que le module optique ajuste le paramètre récepteur de chaque voie physique afin de réduire le taux d'erreur binaire de précorrection de chaque voie physique.
